# EUROPEAN PATENT APPLICATION

(11) **EP 4 503 458 A2**
(43) Date of publication of application: **05.02.2025**
(21) Application number: 24221039.1
(22) Date of filing: 02.09.2022
(51) Int. Cl.: H04B 7/02

(54) **UE IMPLEMENTATION FOR PRS RESOURCE SET AND TRPS PRIORITIZATIONS**

(30) Priority: 01.10.2021 GR 20210100661
(62) Divisional of application: 22778136.6
(71) Applicant: QUALCOMM Incorporated, San Diego, CA 92121-1714 (US)
(72) Inventor: MANOLAKOS, Alexandros, San Diego, CA 92121 (US); KUMAR, Mukesh, San Diego,, CA 92121 (US); YERRAMALLI, Srinivas, San Diego, CA 92121 (US)
(74) Representative: Reddie & Grose LLP

(57) **Abstract**

Aspects presented herein may enable a UE to prioritize frequency layers, TRPs within a frequency layer, PRS resource sets associated with a TRP, and/or PR resources within a PRS resource set based on one or more conditions. There is described a method of wireless communication at a user equipment (UE), comprising: receiving at least one positioning reference signal (PRS) via a plurality of positioning frequency layers (PFLs); and selecting at least one PFL from the plurality of PFLs for measuring the at least one PRS based at least in part on one or more of: i) the at least one PFL associated with a highest number of transmission and reception points (TRPs), ii) the at least one PFL including a highest number of PRS resource sets, iii) the at least one PFL on a same bandwidth part (BWP) of a serving cell, iv) the at least one PFL including a highest geometric dilution of precision (GDOP), or v) the at least one PFL being a sidelink (SL) PFL or a PFL for a UE-to-universal mobile telecommunications system (UMTS) terrestrial radio access network (UTRAN) (Uu) interface (Uu PFL).

## Description

### TECHNICAL FIELD

The present disclosure relates generally to communication systems, and more particularly, to wireless communications involving positioning.

### INTRODUCTION

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

In the 3GPP document titled "Remaining issues on DL PRS processing order" of CMCC (3GPP TSG RAN WG1 #102-e, e-Meeting, August 17th - 28th, 2020, document no. R1-2006199), it is stated that, in the RAN1#101 e-meeting, the issue on the priority of the DL PRS processing order was raised and the following agreement was made: When a UE is configured in the assistance data of a positioning method with a number of PRS resources beyond its capability (FG 13-2,13-3,13-4 for AoD, TDOA, MRTT respectively), the UE assumes the DL-PRS Resources in the assistance data are sorted in a decreasing order of measurement priority. Specifically, according to the current RAN2 structure of the assistance data, the following priority is assumed: a) FFS: the 4 frequency layers are sorted according to priority, b) The 64 TRPs per frequency layer are sorted according to priority, c) The 2 sets per TRP of the frequency layer are sorted according to priority, d) FFS: The 64 resources of the set per TRP per frequency layer are sorted according to priority. The document further presents the authors' views on certain aspects.

The same description of the RAN 1 # 1 0 1-e agreement is also presented in the 3GPP document titled "Priority of Assistance Data" of Nokia (3GPP TSG RAN WG1 #102-e, document no. R1-2006426). The document further presents the authors' views on certain aspects.

### BRIEF SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In an aspect of the disclosure, a method, a computer-readable medium, and an apparatus are provided. The apparatus receives, from each of a plurality of transmission and reception points (TRPs), a plurality of positioning reference signal (PRS) resource sets in a positioning frequency layer (PFL). The apparatus measures a first PRS resource set in the plurality of PRS resource sets from each of the plurality of TRPs before measuring a second PRS resource set in the plurality of PRS resource sets.

In an aspect of the disclosure, a method, a computer-readable medium, and an apparatus are provided. The apparatus receives at least one PRS via a plurality of PFLs. The apparatus selects at least one PFL from the plurality of PFLs for measuring the at least one PRS based at least in part on one or more of: the at least one PFL associated with a highest number of TRPs, the at least one PFL including a highest number of PRS resource sets, the at least one PFL on a same bandwidth part (BWP) of a serving cell, the at least one PFL including a highest geometric dilution of precision (GDOP), or the at least one PFL being a sidelink (SL) PFL or a PFL for a UE-to-universal mobile telecommunications system (UMTS) terrestrial radio access network (UTRAN) (Uu) interface (Uu PFL).

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communications system and an access network.
FIG. 2A is a diagram illustrating an example of a first frame, in accordance with various aspects of the present disclosure.
FIG. 2B is a diagram illustrating an example of DL channels within a subframe, in accordance with various aspects of the present disclosure.
FIG. 2C is a diagram illustrating an example of a second frame, in accordance with various aspects of the present disclosure.
FIG. 2D is a diagram illustrating an example of UL channels within a subframe, in accordance with various aspects of the present disclosure.
FIG. 3 is a diagram illustrating an example of a base station and user equipment (UE) in an access network.
FIG. 4 is a diagram illustrating an example of a UE positioning based on reference signal measurements in accordance with various aspects of the present disclosure.
FIG. 5A is a diagram illustrating an example of downlink-positioning reference signal (DL-PRS) transmitted from multiple transmission-reception points (TRPs)/base stations in accordance with various aspects of the present disclosure.
FIG. 5B is a diagram illustrating an example of uplink-sounding reference signal (UL-SRS) transmitted from a UE in accordance with various aspects of the present disclosure.
FIG. 6 is a diagram illustrating an example of estimating a position of a UE based on multi-round trip time (RTT) measurements from multiple base stations or TRPs in accordance with various aspects of the present disclosure.
FIG. 7 is a diagram illustrating an example DL PRS resource prioritization in accordance with various aspects of the present disclosure.
FIG. 8 is a diagram illustrating an example PRS prioritization associated with multiple PRS resource sets from multiple TRPs in a frequency layer in accordance with various aspects of the present disclosure.
FIG. 9 is a diagram illustrating an example PRS prioritization associated with multiple PRS resource sets from multiple TRPs in a frequency layer in accordance with various aspects of the present disclosure.
FIG. 10 is a diagram illustrating an example PRS prioritization associated with multiple PRS resource sets from multiple TRPs in a frequency layer in accordance with various aspects of the present disclosure.
FIG. 11 is a diagram illustrating an example PRS prioritization associated with multiple PRS resource sets from multiple TRPs in a frequency layer in accordance with various aspects of the present disclosure.
FIG. 12 is a diagram illustrating an example PRS prioritization associated with multiple PRS resource sets from multiple TRPs in a frequency layer in accordance with various aspects of the present disclosure.
FIG. 13 is a diagram illustrating an example PRS prioritization associated with multiple PRS resource sets from multiple TRPs in a frequency layer in accordance with various aspects of the present disclosure.
FIG. 14 is a communication flow illustrating an example of a UE selecting a PFL from a plurality of PFLs in accordance with various aspects of the present disclosure.
FIG. 15A is a diagram illustrating an example PRS measurement prioritization associated with multiple PFLs in accordance with various aspects of the present disclosure.
FIG. 15B is a diagram illustrating an example PRS measurement prioritization associated with multiple PFLs in accordance with various aspects of the present disclosure.
FIG. 15C is a diagram illustrating an example PRS measurement prioritization associated with multiple PFLs in accordance with various aspects of the present disclosure.
FIG. 15D is a diagram illustrating an example PRS measurement prioritization associated with multiple PFLs in accordance with various aspects of the present disclosure.
FIG. 16A is a diagram illustrating an example of GDOP in accordance with various aspects of the present disclosure.
FIG. 16B is a diagram illustrating an example of GDOP in accordance with various aspects of the present disclosure.
FIG. 16C is a diagram illustrating an example of GDOP in accordance with various aspects of the present disclosure.
FIG. 17 is a communication flow illustrating an example of a UE selecting at least one PFL from a plurality of PFLs that include Uu PFL(s) and SL PFL(s) in accordance with various aspects of the present disclosure.
FIG. 18 is a flowchart of a method of wireless communication in accordance with aspects presented herein.
FIG. 19 is a flowchart of a method of wireless communication in accordance with aspects presented herein.
FIG. 20 is a diagram illustrating an example of a hardware implementation for an example apparatus in accordance with aspects presented herein.
FIG. 21 is a flowchart of a method of wireless communication in accordance with aspects presented herein.
FIG. 22 is a diagram illustrating an example of a hardware implementation for an example apparatus in accordance with aspects presented herein.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the types of computer-readable media, or any other medium that can be used to store computer executable code in the form of instructions or data structures that can be accessed by a computer.

While aspects and implementations are described in this application by illustration to some examples, those skilled in the art will understand that additional implementations and use cases may come about in many different arrangements and scenarios. Innovations described herein may be implemented across many differing platform types, devices, systems, shapes, sizes, and packaging arrangements. For example, implementations and/or uses may come about via integrated chip implementations and other non-module-component based devices (e.g., end-user devices, vehicles, communication devices, computing devices, industrial equipment, retail/purchasing devices, medical devices, artificial intelligence (AI)-enabled devices, etc.). While some examples may or may not be specifically directed to use cases or applications, a wide assortment of applicability of described innovations may occur. Implementations may range a spectrum from chip-level or modular components to non-modular, non-chip-level implementations and further to aggregate, distributed, or original equipment manufacturer (OEM) devices or systems incorporating one or more aspects of the described innovations. In some practical settings, devices incorporating described aspects and features may also include additional components and features for implementation and practice of claimed and described aspect. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). It is intended that innovations described herein may be practiced in a wide variety of devices, chip-level components, systems, distributed arrangements, aggregated or disaggregated components, end-user devices, etc. of varying sizes, shapes, and constitution.

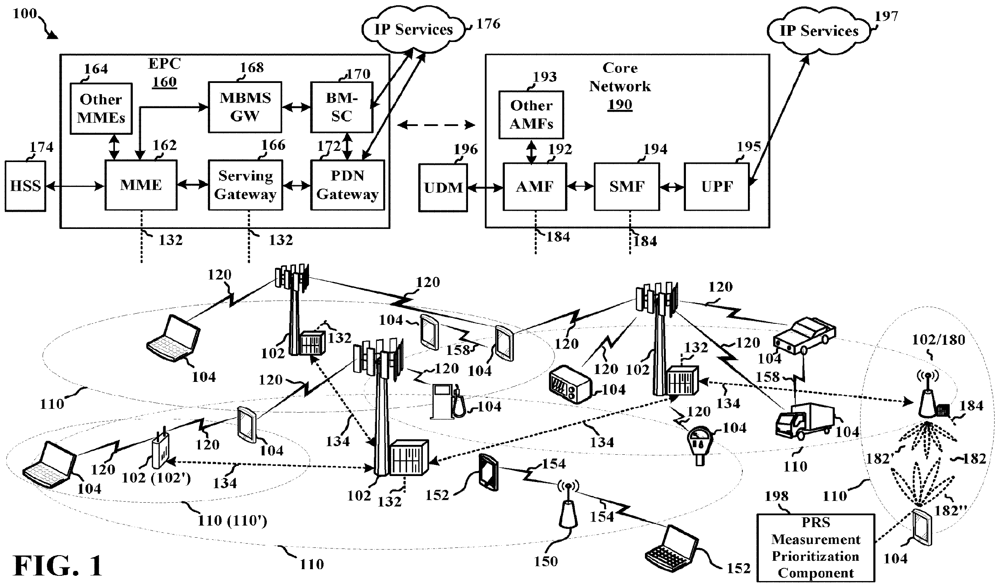

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

Aspects presented herein may enable a UE to prioritize frequency layers, TRPs within a frequency layer, PRS resource sets associated with a TRP, and/or PR resources within a PRS resource set based on one or more conditions. Aspects presented herein may improve UE positioning by enabling the UE to measure a set of PRSs in a more efficient order if the UE is unable to process all of the PRSs within the set.

In certain aspects, the UE 104 may include a PRS measurement prioritization component 198 configured to prioritize PRS measurements for a set of PRSs. In one configuration, the PRS measurement prioritization component 198 may be configured to receive, from each of a plurality of TRPs, a plurality of PRS resource sets in a PFL. In such configuration, the PRS measurement prioritization component 198 may measure a first PRS resource set in the plurality of PRS resource sets from each of the plurality of TRPs before measuring a second PRS resource set in the plurality of PRS resource sets.

In another configuration, the PRS measurement prioritization component 198 may be configured to receive at least one PRS via a plurality of PFLs. In such configuration, the PRS measurement prioritization component 198 may select at least one PFL from the plurality of PFLs for measuring the at least one PRS based at least in part on one or more of: the at least one PFL associated with a highest number of TRPs, the at least one PFL including a highest number of PRS resource sets, the at least one PFL on a same BWP of a serving cell, the at least one PFL including a highest GDOP, or the at least one PFL being an SL PFL or a PFL for a Uu PFL.

The base stations 102 configured for 4G LTE (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G NR (collectively referred to as Next Generation RAN (NG-RAN)) may interface with core network 190 through second backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The first backhaul links 132, the second backhaul links 184, and the third backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to *Y* MHz (e.g., 5, 10, 15, 20, 100, 400, etc. MHz) bandwidth per carrier allocated in a carrier aggregation of up to a total of *Yx* MHz (*x* component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communications system may further include a Wi-Fi access point (AP) 150 in communication with Wi-Fi stations (STAs) 152 via communication links 154, e.g., in a 5 GHz unlicensed frequency spectrum or the like. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same unlicensed frequency spectrum (e.g., 5 GHz, or the like) as used by the Wi-Fi AP 150. The small cell 102', employing NR in an unlicensed frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR2-2 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR2-2, and/or FR5, or may be within the EHF band.

A base station 102, whether a small cell 102' or a large cell (e.g., macro base station), may include and/or be referred to as an eNB, gNodeB (gNB), or another type of base station. Some base stations, such as gNB 180 may operate in a traditional sub 6 GHz spectrum, in millimeter wave frequencies, and/or near millimeter wave frequencies in communication with the UE 104. When the gNB 180 operates in millimeter wave or near millimeter wave frequencies, the gNB 180 may be referred to as a millimeter wave base station. The millimeter wave base station 180 may utilize beamforming 182 with the UE 104 to compensate for the path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include an Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a Packet Switch (PS) Streaming (PSS) Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. In some scenarios, the term UE may also apply to one or more companion devices such as in a device constellation arrangement. One or more of these devices may collectively access the network and/or individually access the network.

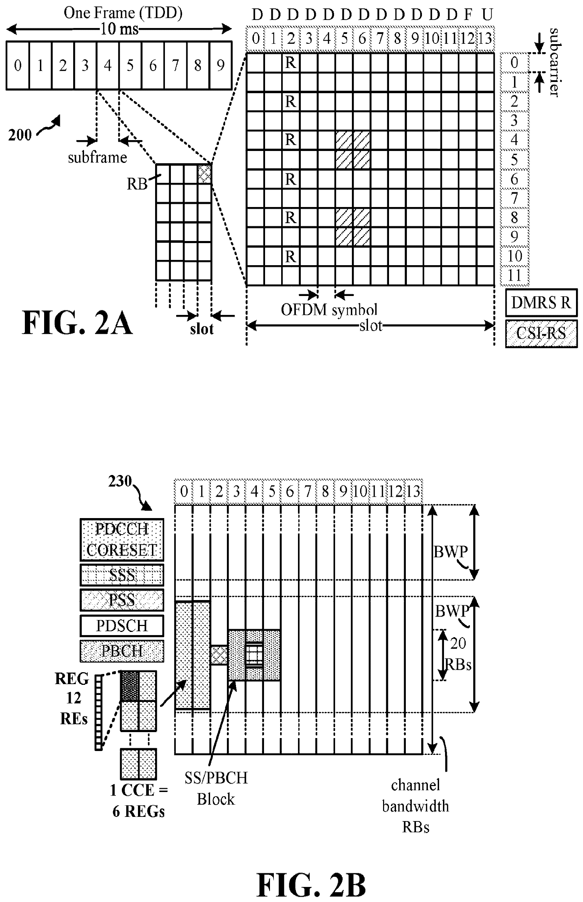

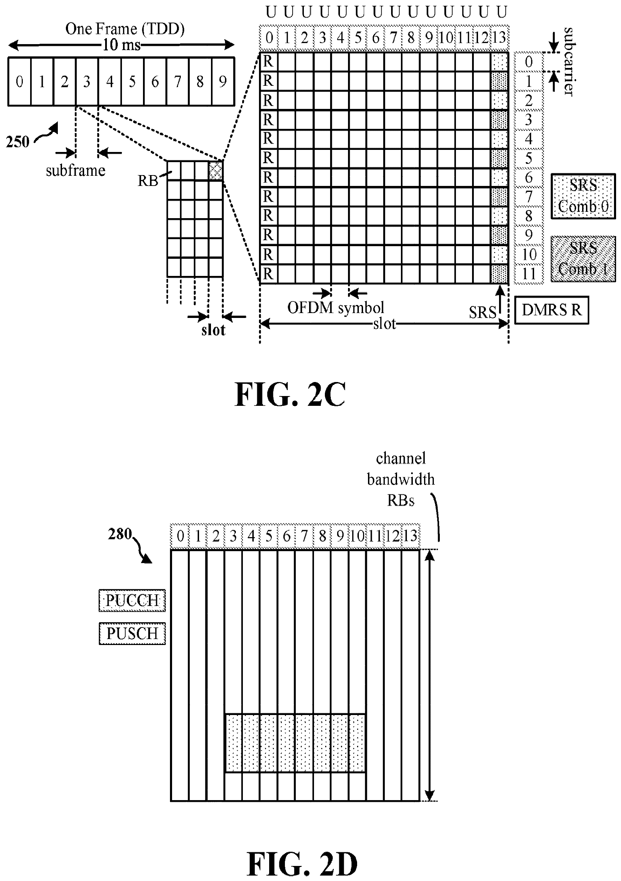

FIG. 2A is a diagram 200 illustrating an example of a first subframe within a 5G NR frame structure. FIG. 2B is a diagram 230 illustrating an example of DL channels within a 5G NR subframe. FIG. 2C is a diagram 250 illustrating an example of a second subframe within a 5G NR frame structure. FIG. 2D is a diagram 280 illustrating an example of UL channels within a 5G NR subframe. The 5G NR frame structure may be frequency division duplexed (FDD) in which for a particular set of subcarriers (carrier system bandwidth), subframes within the set of subcarriers are dedicated for either DL or UL, or may be time division duplexed (TDD) in which for a particular set of subcarriers (carrier system bandwidth), subframes within the set of subcarriers are dedicated for both DL and UL. In the examples provided by FIGs. 2A, 2C, the 5G NR frame structure is assumed to be TDD, with subframe 4 being configured with slot format 28 (with mostly DL), where D is DL, U is UL, and F is flexible for use between DL/UL, and subframe 3 being configured with slot format 1 (with all UL). While subframes 3, 4 are shown with slot formats 1, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G NR frame structure that is TDD.

FIGs. 2A-2D illustrate a frame structure, and the aspects of the present disclosure may be applicable to other wireless communication technologies, which may have a different frame structure and/or different channels. A frame (10 ms) may be divided into 10 equally sized subframes (1 ms). Each subframe may include one or more time slots. Subframes may also include mini-slots, which may include 7, 4, or 2 symbols. Each slot may include 14 or 12 symbols, depending on whether the cyclic prefix (CP) is normal or extended. For normal CP, each slot may include 14 symbols, and for extended CP, each slot may include 12 symbols. The symbols on DL may be CP orthogonal frequency division multiplexing (OFDM) (CP-OFDM) symbols. The symbols on UE may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the CP and the numerology. The numerology defines the subcarrier spacing (SCS) and, effectively, the symbol length/duration, which is equal to 1/SCS.

| *µ* | **SCS** Δ*f* = 2*^{µ}* ·15[kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

For normal CP (14 symbols/slot), different numerologies µ 0 to 4 allow for 1, 2, 4, 8, and 16 slots, respectively, per subframe. For extended CP, the numerology 2 allows for 4 slots per subframe. Accordingly, for normal CP and numerology µ, there are 14 symbols/slot and 2^{µ} slots/subframe. The subcarrier spacing may be equal to 2*^{µ}* * 15 kHz, where *µ* is the numerology 0 to 4. As such, the numerology µ=0 has a subcarrier spacing of 15 kHz and the numerology µ=4 has a subcarrier spacing of 240 kHz. The symbol length/duration is inversely related to the subcarrier spacing. FIGs. 2A-2D provide an example of normal CP with 14 symbols per slot and numerology µ=2 with 4 slots per subframe. The slot duration is 0.25 ms, the subcarrier spacing is 60 kHz, and the symbol duration is approximately 16.67 µs. Within a set of frames, there may be one or more different bandwidth parts (BWPs) (see FIG. 2B) that are frequency division multiplexed. Each BWP may have a particular numerology and CP (normal or extended).

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as R for one particular configuration, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs) (e.g., 1, 2, 4, 8, or 16 CCEs), each CCE including six RE groups (REGs), each REG including 12 consecutive REs in an OFDM symbol of an RB. A PDCCH within one BWP may be referred to as a control resource set (CORESET). A UE is configured to monitor PDCCH candidates in a PDCCH search space (e.g., common search space, UE-specific search space) during PDCCH monitoring occasions on the CORESET, where the PDCCH candidates have different DCI formats and different aggregation levels. Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) acknowledgment (ACK) (HARQ-ACK) feedback (i.e., one or more HARQ ACK bits indicating one or more ACK and/or negative ACK (NACK)). The PUSCH carries data, and may additionally be used to carry a buffer status report (BSR), a power headroom report (PHR), and/or UCI.

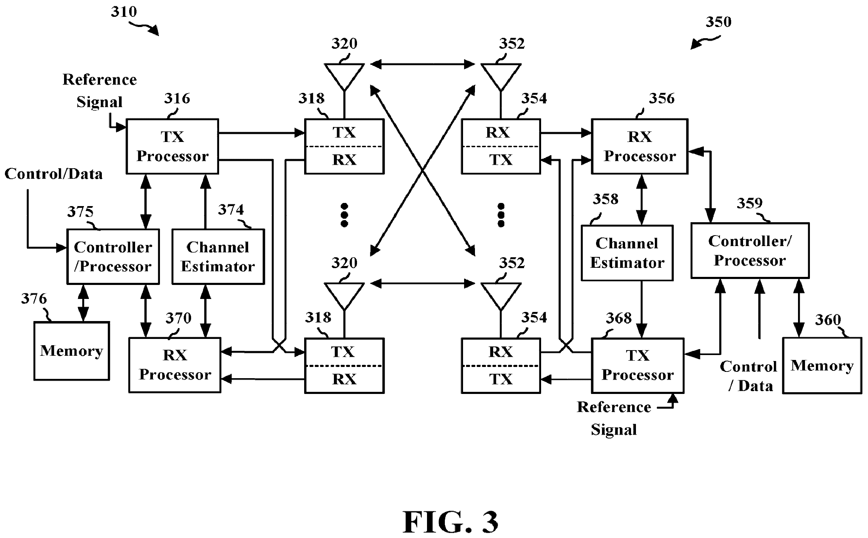

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318 TX. Each transmitter 318 TX may modulate a radio frequency (RF) carrier with a respective spatial stream for transmission.

At the UE 350, each receiver 354 RX receives a signal through its respective antenna 352. Each receiver 354 RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 may be configured to perform aspects in connection with the PRS measurement prioritization component 198 of FIG. 1.

A network may support a number of cellular network-based positioning technologies, such as downlink-based, uplink-based, and/or downlink-and-uplink-based positioning methods. Downlink-based positioning methods may include an observed time difference of arrival (OTDOA) (e.g., in LTE), a downlink time difference of arrival (DL-TDOA) (e.g., in NR), and/or a downlink angle-of-departure (DL-AoD) (e.g., in NR). In an OTDOA or DL-TDOA positioning procedure, a UE may measure the differences between each time of arrival (ToA) of reference signals (e.g., positioning reference signals (PRSs)) received from pairs of base stations, referred to as reference signal time difference (RSTD) measurements or time difference of arrival (TDOA) measurements, and report them to a positioning entity (e.g., a location management function (LMF)). For example, the UE may receive identifiers (IDs) of a reference base station (e.g., a serving base station) and multiple non-reference base stations in assistance data. The UE may then measure the RSTD between the reference base station and each of the non-reference base stations. Based on the known locations of the involved base stations and the RSTD measurements, the positioning entity can estimate a location of the UE. In other words, a position of the UE may be estimated based on measuring reference signals transmitted between the UE and one or more base stations and/or transmission-reception points (TRPs) of the one or more base stations. As such, the PRSs may enable UEs to detect and measure neighbor TRPs, and to perform positioning based on the measurement. For purposes of the present disclosure, the suffixes "-based" and "-assisted" may refer respectively to the node that is responsible for making the positioning calculation (and which may also provide measurements) and a node that provides measurements (but which may not make the positioning calculation). For example, an operation in which measurements are provided by a UE to a base station/positioning entity to be used in the computation of a position estimate may be described as "UE-assisted," "UE-assisted positioning," and/or "UE-assisted position calculation" while an operation in which a UE computes its own position may be described as "UE-based," "UE-based positioning," and/or "UE-based position calculation."

For DL-AoD positioning, the positioning entity may use a beam report from the UE of received signal strength measurements of multiple downlink transmit beams to determine the angle(s) between the UE and the transmitting base station(s). The positioning entity may then estimate the location of the UE based on the determined angle(s) and the known location(s) of the transmitting base station(s).

Uplink-based positioning methods may include UL-TDOA and UL-AoA. UL-TDOA is similar to DL-TDOA, but is based on uplink reference signals (e.g., sounding reference signals (SRSs)) transmitted by the UE. For UL-AoA positioning, one or more base stations may measure the received signal strength of one or more uplink reference signals (e.g., SRSs) received from a UE on one or more uplink receive beams. The positioning entity may use the signal strength measurements and the angle(s) of the receive beam(s) to determine the angle(s) between the UE and the base station(s). Based on the determined angle(s) and the known location(s) of the base station(s), the positioning entity can then estimate the location of the UE.

Downlink-and-uplink-based positioning methods may include enhanced cell-ID (E-CID) positioning and multi-round-trip-time (RTT) positioning (also referred to as "multi-cell RTT"). In an RTT procedure, an initiator (a base station or a UE) transmits an RTT measurement signal (e.g., a PRS or SRS) to a responder (a UE or a base station), which transmits an RTT response signal (e.g., an SRS or a PRS) back to the initiator. The RTT response signal may include the difference between the ToA of the RTT measurement signal and the transmission time of the RTT response signal, referred to as the reception-to-transmission (Rx-Tx) time difference. The initiator may calculate the difference between the transmission time of the RTT measurement signal and the ToA of the RTT response signal, referred to as the transmission-to-reception (Tx-Rx) time difference. The propagation time (also referred to as the "time of flight") between the initiator and the responder may be calculated from the Tx-Rx and Rx-Tx time differences. Based on the propagation time and the known speed of light, the distance between the initiator and the responder may be determined. For multi-RTT positioning, a UE may perform an RTT procedure with multiple base stations to enable its location to be determined (e.g., using multilateration) based on the known locations of the base stations. RTT and multi-RTT methods may be combined with other positioning techniques, such as UL-AoA and DL-AoD, to improve location accuracy.

The E-CID positioning method may be based on radio resource management (RRM) measurements. In E-CID, the UE may report the serving cell ID and the timing advance (TA), as well as the identifiers, estimated timing, and signal strength of detected neighbor base stations. The location of the UE is then estimated based on this information and the known locations of the base station(s).

To assist positioning operations, a location server (e.g., a location server, an LMF, or an SLP) may provide assistance data to the UE. For example, the assistance data may include identifiers of the base stations (or the cells/TRPs of the base stations) from which to measure reference signals, the reference signal configuration parameters (e.g., the number of consecutive positioning subframes, periodicity of positioning subframes, muting sequence, frequency hopping sequence, reference signal identifier, reference signal bandwidth, etc.), and/or other parameters applicable to the particular positioning method. Alternatively, the assistance data may originate directly from the base stations (e.g., in periodically broadcasted overhead messages, etc.). In some cases, the UE may be able to detect neighbor network nodes without the use of assistance data.

In the case of an OTDOA or DL-TDOA positioning procedure, the assistance data may further include an expected RSTD value and an associated uncertainty, or search window, around the expected RSTD. In some cases, the value range of the expected RSTD may be +/-500 microseconds (µs). In some cases, when any of the resources used for the positioning measurement are in FR1, the value range for the uncertainty of the expected RSTD may be +/-32 µs. In other cases, when all of the resources used for the positioning measurement(s) are in FR2, the value range for the uncertainty of the expected RSTD may be +/- 8 µs.

A location estimate may also be referred to as a position estimate, location, position, position fix, fix, or the like. A location estimate may be geodetic and include coordinates (e.g., latitude, longitude, and possibly altitude) or may be civic and include a street address, postal address, or some other verbal description of a location. A location estimate may further be defined relative to some other known location or defined in absolute terms (e.g., using latitude, longitude, and possibly altitude). A location estimate may include an expected error or uncertainty (e.g., by including an area or volume within which the location is expected to be included with some specified or default level of confidence). For purposes of the present disclosure, reference signals may include PRS, tracking reference signals (TRS), phase tracking reference signals (PTRS), cell-specific reference signals (CRS), CSI-RS, demodulation reference signals (DMRS), PSS, SSS, SSBs, SRS, etc., depending on whether the illustrated frame structure is used for uplink or downlink communication. In some examples, a collection of resource elements (REs) that are used for transmission of PRS may be referred to as a "PRS resource." The collection of resource elements may span multiple PRBs in the frequency domain and one or more consecutive symbol(s) within a slot in the time domain. In a given OFDM symbol in the time domain, a PRS resource may occupy consecutive PRBs in the frequency domain. In other examples, a "PRS resource set" may refer to a set of PRS resources used for the transmission of PRS signals, where each PRS resource may have a PRS resource ID. In addition, the PRS resources in a PRS resource set may be associated with a same TRP. A PRS resource set may be identified by a PRS resource set ID and may be associated with a particular TRP (e.g., identified by a TRP ID). In addition, the PRS resources in a PRS resource set may have a same periodicity, a common muting pattern configuration, and/or a same repetition factor across slots. The periodicity may be a time from a first repetition of a first PRS resource of a first PRS instance to the same first repetition of the same first PRS resource of the next PRS instance. For example, the periodicity may have a length selected from 2^µ * {4, 5, 8, 10, 16, 20, 32, 40, 64, 80, 160, 320, 640, 1280, 2560, 5120, 10240} slots, where µ = 0, 1, 2, 3. The repetition factor may have a length selected from { 1, 2, 4, 6, 8, 16, 32} slots. A PRS resource ID in a PRS resource set may be associated with a single beam (or beam ID) transmitted from a single TRP (where a TRP may transmit one or more beams). That is, each PRS resource of a PRS resource set may be transmitted on a different beam, and as such, a "PRS resource," or simply "resource," also can be referred to as a "beam." In some examples, a "PRS instance" or "PRS occasion" may be one instance of a periodically repeated time window (such as a group of one or more consecutive slots) where PRS are expected to be transmitted. A PRS occasion also may be referred to as a "PRS positioning occasion," a "PRS positioning instance," a "positioning occasion," "a positioning instance," a "positioning repetition," or simply an "occasion," an "instance," and/or a "repetition," etc.

A positioning frequency layer (PFL) (which may also be referred to as a "frequency layer") may be a collection of one or more PRS resource sets across one or more TRPs that have the same values for certain parameters. Specifically, the collection of PRS resource sets may have a same subcarrier spacing and cyclic prefix (CP) type (e.g., meaning all numerologies supported for PDSCHs are also supported for PRS), the same Point A, the same value of the downlink PRS bandwidth, the same start PRB (and center frequency), and/or the same comb-size, etc. The Point A parameter may take the value of a parameter *ARFCN-ValueNR* (where "ARFCN" stands for "absolute radio-frequency channel number") and may be an identifier/code that specifies a pair of physical radio channel used for transmission and reception. In some examples, a downlink PRS bandwidth may have a granularity of four PRBs, with a minimum of 24 PRBs and a maximum of 272 PRBs. In other examples, up to four frequency layers may be configured, and up to two PRS resource sets may be configured per TRP per frequency layer.

The concept of a frequency layer may be similar to a component carrier (CC) and a BWP, where CCs and BWPs may be used by one base station (or a macro cell base station and a small cell base station) to transmit data channels, while frequency layers may be used by multiple (e.g., three or more) base stations to transmit PRS. A UE may indicate the number of frequency layers it is capable of supporting when the UE sends the network its positioning capabilities, such as during a positioning protocol session. For example, a UE may indicate whether it is capable of supporting one or four PFLs.

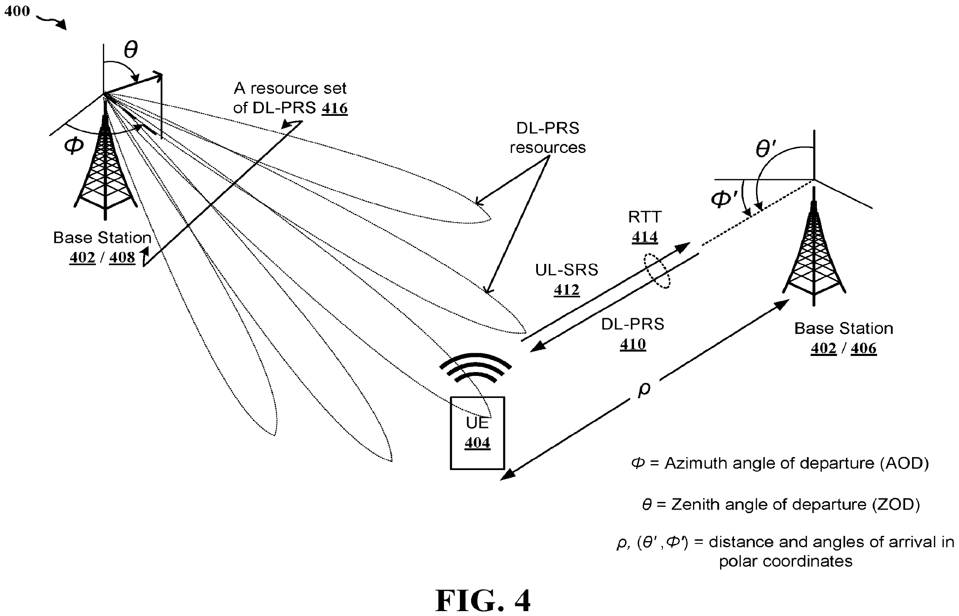

FIG. 4 is a diagram 400 illustrating an example of a UE positioning based on reference signal measurements in accordance with various aspects of the present disclosure. In one example, a location of UE 404 may be estimated based on multi-cell round trip time (multi-RTT) measurements, where multiple base stations 402 may perform round trip time (RTT) measurements for signals transmitted to and received from the UE 404 to determine the approximate distance of UE 404 with respect to each of the multiple base stations 402. Similarly, the UE 404 may perform RTT measurements for signals transmitted to and received from the base stations 402 to determine the approximate distance of each base station with respect to the UE 404. Then, based at least in part on the approximate distances of UE 404 with respect to the multiple base stations 402, a location management function (LMF) that is associated with the base stations 402 and/or the UE 404 may estimate the position of UE 404. For example, a base station 406 may transmit at least one downlink positioning reference signal (DL-PRS) 410 to the UE 404, and may receive at least one uplink sounding reference signal (UL-SRS) 412 transmitted from the UE 404. Based at least in part on measuring an RTT 414 between the DL-PRS 410 transmitted and the UL-SRS 412 received, the base station 406 or an LMF associated with the base station 406 may identify the position of UE 404 (e.g., distance) with respect to the base station 406. Similarly, the UE 404 may transmit UL-SRS 412 to the base station 406, and may receive DL-PRS 410 transmitted from the base station 406. Based at least in part on measuring the RTT 414 between the UL-SRS 412 transmitted and the DL-PRS 410 received, the UE 404 or an LMF associated with the UE 404 may identify the position of base station 406 with respect to the UE 404. The multi-RTT measurement mechanism may be initiated by the LMF that is associated with the base station 406/408 and/or the UE 404. A base station may configure UL-SRS resources to a UE via radio resource control (RRC) signaling. In some examples, the UE and the base station (or TRPs of the base station) may report the multi-RTT measurements to the LMF, and the LMF may estimate the position of the UE based on the reported multi-RTT measurements.

In other examples, a position of a UE may be estimated based on multiple antenna beam measurements, where a downlink angle of departure (DL-AoD) and/or uplink angle of arrival (UL-AoA) of transmissions between a UE and one or more base stations/TRPs may be used to estimate the position of the UE and/or the distance of the UE with respect to each base station/TRP. For example, referring back to FIG. 4, with regard to the DL-AoD, the UE 404 may perform reference signal received power (RSRP) measurements for a set of DL-PRS 416 transmitted from multiple transmitting beams (e.g., DL-PRS beams) of a base station 408, and the UE 404 may provide the DL-PRS beam measurements to a serving base station (or to the LMF associated with the base station). Based on the DL-PRS beam measurements, the serving base station or the LMF may derive the azimuth angle (e.g., *Φ*) of departure and the zenith angle (e.g., *θ*) of departure for DL-PRS beams of the base station 408. Then, the serving base station or the LMF may estimate the position of UE 404 with respect to the base station 408 based on the azimuth angle of departure and the zenith angle of departure of the DL-PRS beams. Similarly, for the UL-AoA, a position of a UE may be estimated based on UL-SRS beam measurements measured at different base stations, such as at the base stations 402. Based on the UL-SRS beam measurements, a serving base station or an LMF associated with the serving base station may derive the azimuth angle of arrival and the zenith angle of arrival for UL-SRS beams from the UE, and the serving base station or the LMF may estimate the position of the UE and/or the UE distance with respect to each of the base stations based on the azimuth angle of arrival and the zenith angle of arrival of the UL-SRS beams.

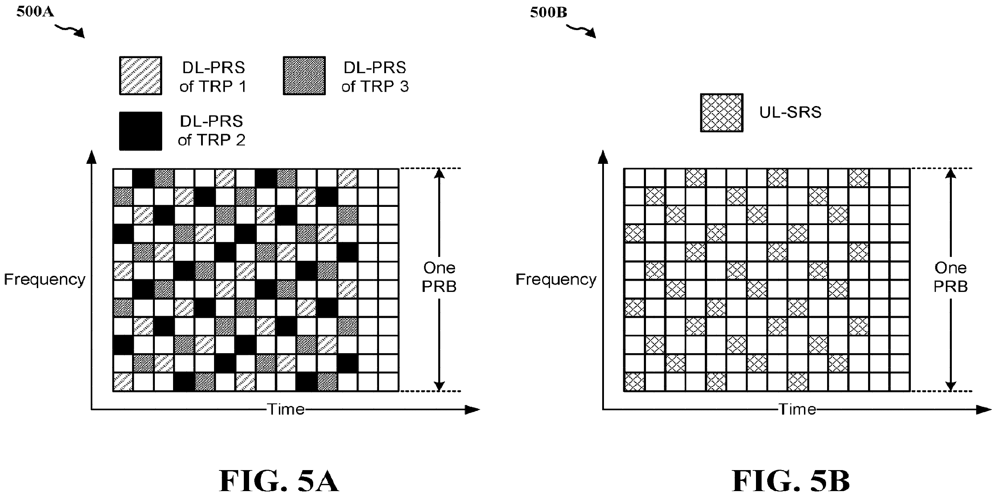

FIG. 5A is a diagram 500A illustrating an example of DL-PRS transmitted from multiple TRPs/base stations in accordance with various aspects of the present disclosure. In one example, a serving base station may configure DL-PRS to be transmitted from one or more TRPs/base stations within a slot or across multiple slots. If the DL-PRS is configured to be transmitted within a slot, the serving base station may configure the starting resource element in time and frequency from each of the one or more TRPs/base stations. If the DL-PRS is configured to be transmitted across multiple slots, the serving base station may configure gaps between DL-PRS slots, periodicity of the DL-PRS, and/or density of the DL-PRS within a period. The serving base station also may configure the DL-PRS to start at any physical resource block (PRB) in the system bandwidth. In one example, the system bandwidth may range from 24 to 276 PRBs in steps of 4 PRBs (e.g., 24, 28, 32, 36, etc.). The serving base station may transmit the DL-PRS in PRS beams, where a PRS beam may be referred to as a "PRS resource" and a full set of PRS beams transmitted from a TRP on a same frequency may be referred to as a "PRS resource set" or a "resource set of PRS," such as described in connection with FIG. 4. As shown by FIG. 5A, the DL-PRS transmitted from different TRPs and/or from different PRS beams may be multiplexed across symbols or slots.

In some examples, each symbol of the DL-PRS may be configured with a comb-structure in frequency, where the DL-PRS from a base station or a TRP may occupy every *N*^{th} subcarrier. The comb value N may be configured to be 2, 4, 6, or 12. The length of the PRS within one slot may be a multiple of N symbols and the position of the first symbol within a slot may be flexible as long as the slot consists of at least N PRS symbols. The diagram 500A shows an example of a comb-6 DL-PRS configuration, where the pattern for the DL-PRS from different TRPs/base stations may be repeated after six (6) symbols.

FIG. 5B is a diagram 500B illustrating an example of UL-SRS transmitted from a UE in accordance with various aspects of the present disclosure. In one example, the UL-SRS from a UE may be configured with a comb-4 pattern, where the pattern for UL-SRS may be repeated after four (4) symbols. Similarly, the UL-SRS may be configured in an SRS resource of an SRS resource set, where each SRS resource may correspond to an SRS beam, and the SRS resource sets may correspond to a collection of SRS resources (e.g., beams) configured for a base station/TRP. In some examples, the SRS resources may span 1, 2, 4, 8, or 12 consecutive OFDM symbols. In other examples, the comb size for the UL-SRS may be configured to be 2, 4, or 8.

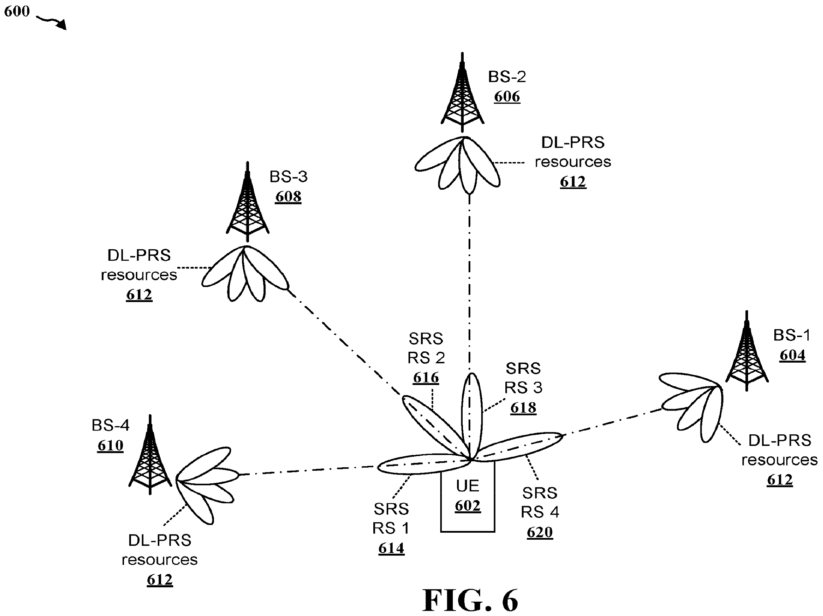

FIG. 6 is a diagram 600 illustrating an example of estimating a position of a UE based on multi-RTT measurements from multiple base stations or TRPs in accordance with various aspects of the present disclosure. A UE 602 may be configured by a serving base station to decode DL-PRS resources 612 that correspond to and are transmitted from a first base station (BS) 604, a second BS 606, a third BS 608, and a fourth BS 610. The UE 602 may also be configured to transmit UL-SRSs on a set of UL-SRS resources, which may include a first SRS resource 614, a second SRS resource 616, a third SRS resource 618, and a fourth SRS resource 620, such that the serving cell(s), e.g., the first BS 604, the second BS 606, the third BS 608, and the fourth BS 610, and as well as other neighbor cell(s), may be able to measure the set of the UL-SRS resources transmitted from the UE 602. For multi-RTT measurements based on DL-PRS and UL-SRS, as there may be an association between a measurement of a UE for the DL-PRS and a measurement of a base station for the UL-SRS, the smaller the gap is between the DL-PRS measurement of the UE and the UL-SRS transmission of the UE, the better the accuracy may be for estimating the position of the UE and/or the distance of the UE with respect to each BS.

Note that the terms "positioning reference signal" and "PRS" generally refer to specific reference signals that are used for positioning in NR and LTE systems. However, as used herein, the terms "positioning reference signal" and "PRS" may also refer to any type of reference signal that can be used for positioning, such as but not limited to, PRS as defined in LTE and NR, TRS, PTRS, CRS, CSI-RS, DMRS, PSS, SSS, SSB, SRS, UL-PRS, etc. In addition, the terms "positioning reference signal" and "PRS" may refer to downlink or uplink positioning reference signals, unless otherwise indicated by the context. To further distinguish the type of PRS, a downlink positioning reference signal may be referred to as a "DL-PRS," and an uplink positioning reference signal (e.g., an SRS-for-positioning, PTRS) may be referred to as an "UL-PRS." In addition, for signals that may be transmitted in both the uplink and downlink (e.g., DMRS, PTRS), the signals may be prepended with "UL" or "DL" to distinguish the direction. For example, "UL-DMRS" may be differentiated from "DL-DMRS."

In some scenarios, a UE may receive a plurality of PRS resources from multiple TRPs via one or more PFLs, where the UE may not have capabilities to process all of the plurality of PRS resources. As such, the UE may apply a predefined prioritization rule to prioritize measurements of PRS resources. Based on the predefined prioritization rule, the UE may measure a subset of the plurality of PRS resources, and the UE may skip measuring another subset of the plurality of PRS resources.

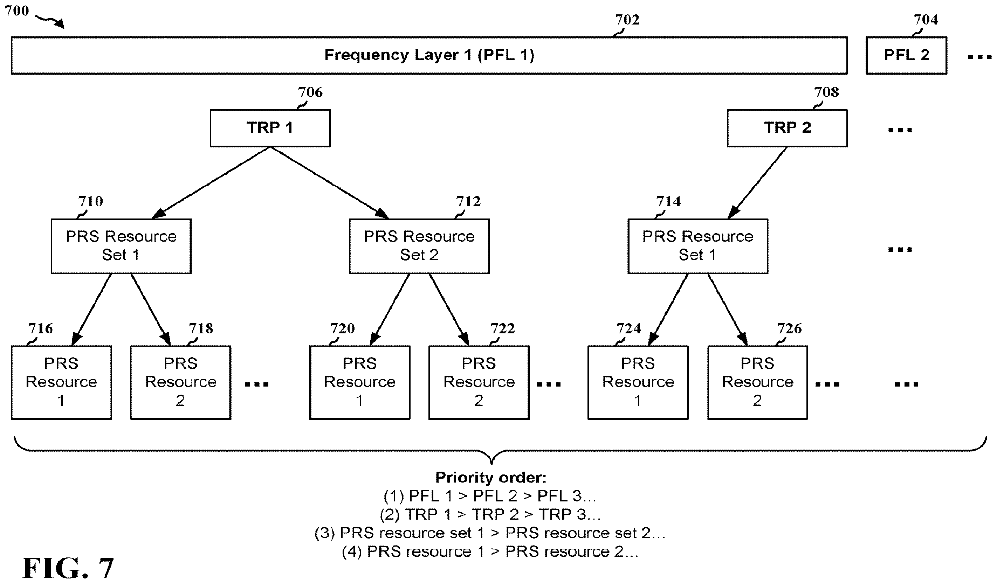

FIG. 7 is a diagram 700 illustrating an example DL PRS resource prioritization in accordance with various aspects of the present disclosure. A UE may be configured with a number of PRS resources in an assistance data of a positioning session, where the number of PRSs resources to be processed by the UE may be beyond the processing capability of the UE. In one example, the UE may assume the DL PRS resources in the assistance data are sorted in a decreasing order of measurement priority. For example, if the UE is configured to receive or measure the DL PRS resources via multiple frequency layers (e.g., PFLs), where each PFL may include PRS resources transmitted from multiple TRPs in, the UE may measure the DL PRS resources based on the priority associated with the multiple frequency layers (e.g., from a first frequency layer to a last frequency layer), based on the priority associated with the TRPs in each PFL (e.g., from a first TRP to a last TRP in a PFL), based on the priority associated with the RPS resource sets associated with each TRP (e.g., from a first PRS resource set to a last PRS resource set in a TRP), and based on the priority associated with the RPS resources within each PRS resource set (e.g., from a first PRS resource to a last PRS resource in a resource set), etc.

For example, as shown by the diagram 700, the UE may be configured to receive DL PRSs from a first frequency layer 702 (PFL 1) and a second frequency layer 704 (PFL 2). The first frequency layer 702 may include DL PRSs transmitted from a first TRP 706 and a second TRP 708, where the first TRP 706 may transmit PRSs using a first PRS resource 716 and a second PRS resource 718 in a first PRS resource set 710, and using a first PRS resource 720 and a second PRS resource 722 in a second PRS resource set 712, and the second TRP 708 may transmit PRSs using a first PRS resource 724 and a second PRS resource 726 in a first PRS resource set 714. Similarly, the UE may also receive DL PRSs from the second frequency layer 704 via multiple TRPs, PRS resource sets, and/or PRS resources.

In one example, if the UE does not have the capability to process all the configured PRS resources, the UE may be configured to receive or measure the PRSs received from the first frequency layer 702 first before processing PRSs in the second frequency layer 704. Similarly, if there are also a third frequency layer (PFL 3) and a fourth frequency layer (PFL 4), the UE may be configured to receive or measure the PRSs received from the first frequency layer 702 first, then the PRSs received from the second frequency layer 704, then the PRSs received from the third frequency layer, and then the PRSs received from the fourth frequency layer (e.g., PRSs are processed/measured based on PFL 1 > PFL 2 > PFL 3 > PFL 4). If the UE does not have the capability to process/measure PRSs in a frequency layer, the UE may skip measuring the PRSs in that frequency layer. For example, if the UE is configured to receive the PRSs via the first frequency layer 702 and the second frequency layer 704 but the UE is just able to process/measure PRSs in the first frequency layer 702, the UE may skip PRS measurements for the second frequency layer 704.

Similarly, within a frequency layer, if the UE does not have the capability to process all the PRSs in the frequency layer, the UE may prioritize its PRS measurements based on the priorities associated with the TRPs. For example, the UE may be configured to receive or measure the PRSs received from the first TRP 706 before processing PRSs from the second TRP 708. Similarly, if there are also a third TRP (TRP 3) and a fourth TRP (TRP 4), the UE may be configured to receive or measure the PRSs received from the first TRP 706, then receive or measure the PRSs from the second TRP 708, then receive or measure the PRSs from the third TRP, and then receive or measure the PRSs from the fourth TRP (e.g., PRSs are processed/measured based on TRP 1 > TRP 2 > TRP 3 > TRP 4 with a frequency layer). If the UE does not have the capability to process/measure PRSs from a TRP, the UE may skip measuring the PRSs in that TRP. For example, if the UE is configured to receive the PRSs via the first TRP 706 and the second TRP 708 via the first frequency layer 702 but the UE is just able to process/measure PRSs in the first TRP 706, the UE may skip PRS measurements for the second TRP 708.

Furthermore, within a TRP, if the UE does not have the capability to process all the PRSs in that TRP, the UE may prioritize its PRS measurements based on the priorities associated with the PRS resource sets. For example, the UE may be configured to receive or measure the PRSs received from the first PRS resource set 710 first before processing PRSs from the second PRS resource set 712. Similarly, if there are also a third PRS resource set (PRS resource set 3) and a fourth PRS resource set (PRS resource set 4), the UE may be configured to receive or measure the PRSs received from the first PRS resource set 710 first, then the PRSs received from the second PRS resource set 712, then the PRSs received from the third PRS resource set, and then the PRSs received from the fourth PRS resource set (e.g., PRSs are processed/measured based on PRS resource set 1 > PRS resource set 2 > PRS resource set 3 > PRS resource set 4 with a TRP). If the UE does not have the capability to process/measure PRSs in a PRS resource set, the UE may skip measuring the PRSs in that PRS resource set. For example, if the UE is configured to receive the PRSs via the first PRS resource set 710 and the second PRS resource set 712 from the first TRP 706 but the UE is just able to process/measure PRSs in the first PRS resource set 710, the UE may skip PRS measurements for the second PRS resource set 712.

Lastly, within a PRS resource set, if the UE does not have the capability to process all the PRSs in that PRS resource set, the UE may prioritize its PRS measurements based on the priorities associated with the PRS resources. For example, the UE may be configured to receive or measure the PRSs received from the first PRS resource 716 first before processing PRSs from the second PRS resource 718. Similarly, if there are also a third PRS resource (PRS resource 3) and a fourth PRS resource (PRS resource 4), the UE may be configured to receive or measure the PRSs received from the first PRS resource 716 first, then the PRSs received from the second PRS resource 718, then the PRSs received from the third PRS resource, and then the PRSs received from the fourth PRS resource (e.g., PRSs are processed/measured based on PRS resource 1 > PRS resource 2 > PRS resource 3 > PRS resource 4 with a PRS resource set). If the UE does not have the capability to process/measure PRSs in a PRS resource, the UE may skip measuring the PRSs in that PRS resource. For example, if the UE is configured to receive the PRSs via the first PRS resource 716 and the second PRS resource 718 of the first PRS resource set 710 but the UE is just able to process/measure PRSs in the first PRS resource 716, the UE may skip PRS measurements for the second PRS resource 718.

As such, if a UE is configured with multiple PRS resources via multiple frequency layers, multiple TRPs, multiple PRS resource sets, and/or multiple PRS resources, the UE may sort the frequency layers (e.g., may be up to four frequency layers) according to a priority, sort the TRPs per frequency layer (e.g., may be up to sixty four (64) TRPs per frequency layer) also according to a priority, sort the PRS resource sets per TRP (e.g., may be up to two resource sets per TRP) according to a priority, and/or sort the PRS resource per PRS resource set (e.g., may be up to sixty four (64) PRS resources per PRS resource set). In other words, within a positioning frequency layer, the DL PRS resources may be sorted in the decreasing order of priority for measurement to be performed by the UE, with the reference indicated by *nr-DL-PRS-ReferenceInfo* being the highest priority for measurement, and the following priority is assumed: (1) up to 64 *dl-PRS-IDs* of the frequency layer are sorted according to priority; and up to 2 DL PRS resource sets per *dl-PRS-ID* of the frequency layer are sorted according to priority.

In some examples, prioritizations of PLFs, prioritizations of TRPs within a PLF, and/or prioritizations of PRS resource sets within a TRP may be provided/configured by an LMF. While these prioritizations may enable a UE with an initial acquisition of PRS signal or a fast acquisition, there may be no guarantee that a best position fix in a UE-based positioning session or a UE-assisted positioning session is going to be with respect to a higher priority PFL/TRP/PRS resource set. For example, depending on a location of a UE and surrounding environment, lower priority TRP/resource set may also be providing better estimates for the positioning.

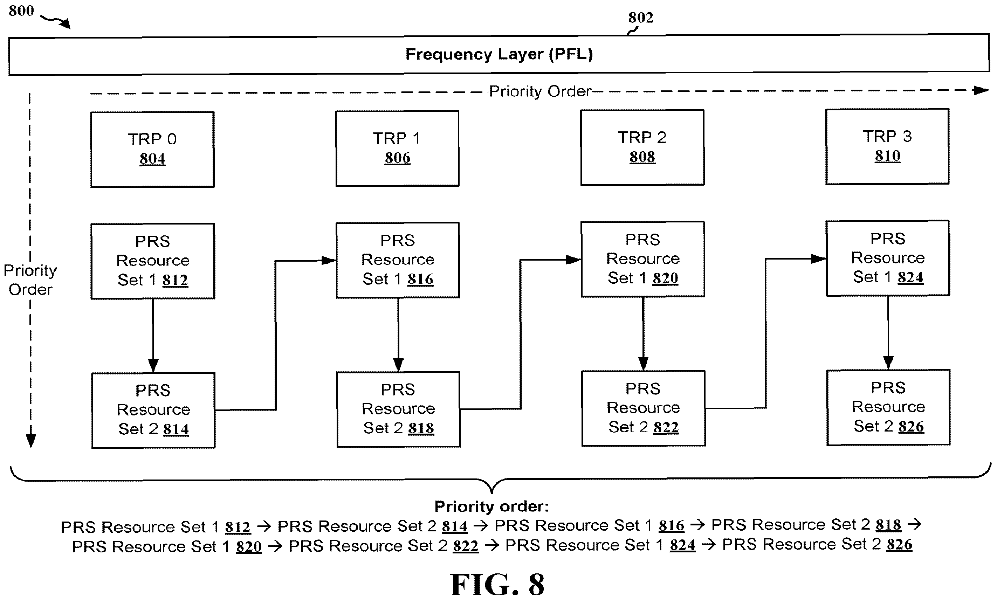

FIG. 8 is a diagram 800 illustrating an example PRS prioritization associated with multiple PRS resource sets from multiple TRPs in a frequency layer in accordance with various aspects of the present disclosure. A UE may be configured to receive PRSs in a frequency layer 802 transmitted from a first TRP 804, a second TRP 806, a third TRP 808, and a fourth TRP 810, where each TRP may transmit its PRSs via two PRS resource sets. For example, the first TRP 804 may transmit PRSs based on a first PRS resource set 812 and a second PRS resource set 814; the second TRP 806 may transmit PRSs based on a first PRS resource set 816 and a second PRS resource set 818; the third TRP 808 may transmit PRSs based on a first PRS resource set 820 and a second PRS resource set 822; and the fourth TRP 810 may transmit PRSs based on a first PRS resource set 824 and a second PRS resource set 826, etc. If aspects and/or prioritization rules described in connection with FIG. 7 are applied, as shown by the diagram 800, the UE may measure the PRSs in the PRS resource sets based on the following measurement scheduling: first TRP 804, first PRS resource set 812 > first TRP 804, second PRS resource set 814 > second TRP 806, first PRS resource set 816 > second TRP 806, second PRS resource set 818 > third TRP 808, first PRS resource set 820 > third TRP 808, second PRS resource set 822 > fourth TRP 810, first PRS resource set 824 > fourth TRP 810, second PRS resource set 826, etc. However, in some scenarios, this scheduling or prioritization may not provide an efficient and/or fast result all the time. For example, after measuring PRSs for a period of time, a UE may have better information about PRS resource sets, where different scheduling/prioritizing option(s) may become more suitable for the UE.

Aspects presented herein may enable a UE to prioritize PRS measurements for multiple frequency layers, TRPs within a frequency layer, PRS resource sets associated with a TRP, and/or PRS resources within a PRS resource set based on one or more conditions. Aspects presented herein may improve UE positioning by enabling the UE to measure a set of PRSs in a more efficient order if the UE is unable to process all of the PRSs within the set.

In one aspect of the present disclosure, instead of measuring all the PRS resource sets on a higher priority TRP, a UE may be configured to measure the higher priority PRS resource set on each TRP. After measuring all the higher priority PRS resource set on each TRP, UE may start to measure the second higher priority PRS resource set across TRPs and so on.

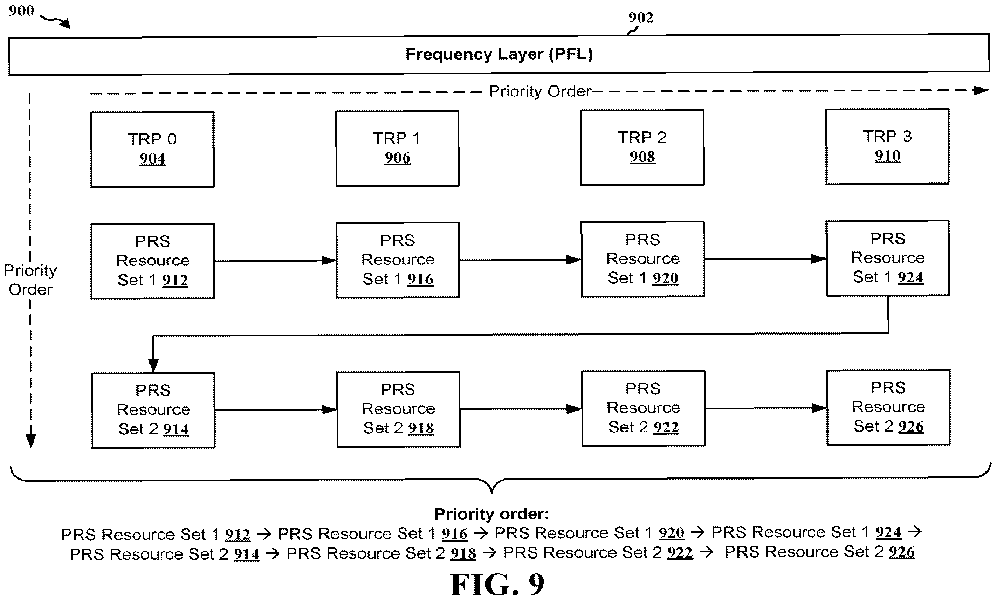

FIG. 9 is a diagram 900 illustrating an example PRS prioritization associated with multiple PRS resource sets from multiple TRPs in a frequency layer in accordance with various aspects of the present disclosure. A UE may be configured to receive PRSs in a frequency layer 902 transmitted from a first TRP 904, a second TRP 906, a third TRP 908, and a fourth TRP 910, where each TRP may transmit its PRSs via two PRS resource sets. For example, the first TRP 904 may transmit PRSs based on a first PRS resource set 912 and a second PRS resource set 914, where the first PRS resource set 912 may have a higher priority than the second PRS resource set 914; the second TRP 906 may transmit PRSs based on a first PRS resource set 916 and a second PRS resource set 918, where the first PRS resource set 916 may have a higher priority than the second PRS resource set 918; the third TRP 908 may transmit PRSs based on a first PRS resource set 920 and a second PRS resource set 922, where the first PRS resource set 920 may have a higher priority than the second PRS resource set 922; and the fourth TRP 910 may transmit PRSs based on a first PRS resource set 924 and a second PRS resource set 926, where the first PRS resource set 924 may have a higher priority than the second PRS resource set 926, etc.

Instead of measuring all the PRS resource sets on one TRP before moving to a next TRP, the UE may measure at least one PRS resource set with a highest priority in each of the multiple TRPs first before measuring PRS resource set(s) with a second highest priority. In addition, the UE may also measure TRPs based on their associated priority, such as from a first TRP to a last TRP (e.g., TRP 1 to TRP 4) or vice versa (e.g., TRP 4 to TRP 1). For example, as shown by the diagram 900, the UE may measure the PRSs in the PRS resource sets based on the following measurement scheduling: first TRP 904, first PRS resource set 912 > second TRP 906, first PRS resource set 916 > third TRP 908, first PRS resource set 920 > fourth TRP 910, first PRS resource set 924 > first TRP 904, second PRS resource set 914 > second TRP 906, second PRS resource set 918 > third TRP 908, second PRS resource set 922 > fourth TRP 910, second PRS resource set 926, etc.

One advantage with measuring at least one PRS resource set (e.g., the PRS resource set with a highest priority) from each of the multiple TRPs is that the UE may be able to measure PRSs from more TRPs, such that the UE may be able to determine which TRP(s) may have best measurements (e.g., channel conditions, quality metrics) that are more suitable for a positioning session. For example, if the prioritization rules discussed in connection FIGs. 7 and 8 are applied, a UE with limited PRS measuring/processing capability may be able to measure PRS resource sets from a first TRP but may not be able to measure PRS resource sets from other TRPs in a positioning session. Thus, the UE may obtain channel information for that first TRP but not from other TRPs. If that first TRP has a channel condition worse than one or more of the other TRPs, then the positioning session may not be optimized. On the other hand, if the prioritization discussed in connection FIG. 9 is applied, the UE with limited PRS measuring/processing capability may have an opportunity to measure at least one PRS resource set from each of the multiple TRPs. Thus, the UE may obtain channel information for multiple TRPs measured, and the UE may make a more informed decision on which TRP(s) are more suitable for a positioning session than other TRPs to optimize the positioning session. For example, after measuring at least one PRS resource set from each of the multiple TRPs as described in connection with FIG. 9, the UE may be configured to measure PRS resource set(s) from TRP(s) with channel conditions meeting a threshold.

In another aspect of the present disclosure, instead of measuring all the PRS resource sets on higher priority TRP, a UE may be configured to measure the at least one PRS resource set on each TRP which has a smaller number of PRS resources. The priority between different PRS resource set may also be based on the TRP priority (e.g., from a first TRP to a last TRP or vice versa). An advantage of measuring a PRS resource set with least PRS resources is that with the smaller set measurement, a UE may be able to measure through all of the TRPs faster (e.g., less PRS resources may take less time to measure), such that the UE may filter out the TRP(s) which are not visible or not giving good results (e.g., not having channel conditions meeting a threshold). Then, going forward for tracking mode, the UE may start measuring the smaller number of TRPs.

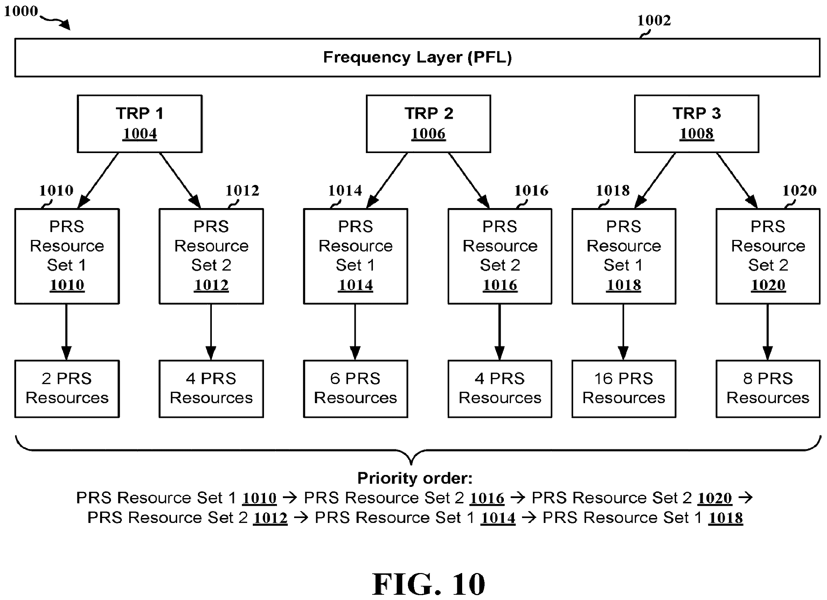

FIG. 10 is a diagram 1000 illustrating an example PRS prioritization associated with multiple PRS resource sets from multiple TRPs in a frequency layer in accordance with various aspects of the present disclosure. A UE may be configured to receive PRSs in a frequency layer 1002 transmitted from a first TRP 1004, a second TRP 1006, and a third TRP 1008, where each TRP may transmit its PRSs via two PRS resource sets. For example, the first TRP 1004 may transmit PRSs based on a first PRS resource set 1010 and a second PRS resource set 1012, where the first PRS resource set 1010 may include two (2) PRS resources and the second PRS resource set 1012 may include four (4) PRS resources; the second TRP 1006 may transmit PRSs based on a first PRS resource set 1014 and a second PRS resource set 1016, where the first PRS resource set 1014 may include six (6) PRS resources and the second PRS resource set 1016 may include four (4) PRS resources; and the third TRP 1008 may transmit PRSs based on a first PRS resource set 1018 and a second PRS resource set 1020, where the first PRS resource set 1018 may include sixteen (16) PRS resources and the second PRS resource set 1020 may include eight (8) PRS resources, etc.

Instead of measuring all the PRS resource sets on a one TRP before moving to a next TRP, the UE may measure one PRS resource set with a least number of PRS resources in each of the multiple TRPs first before measuring another PRS resource set(s) in each of the multiple TRPs. In addition, the UE may also measure TRPs based on their associated priority, such as from a first TRP to a last TRP (e.g., TRP 1 to TRP 3) or vice versa (e.g., TRP 3 to TRP 1). For example, as shown by the diagram 1000, the UE may measure the PRSs in the PRS resource sets based on the following measurement scheduling: first TRP 1004, first PRS resource set 1010 > second TRP 1006, second PRS resource set 1016 > third TRP 1008, second PRS resource set 1020 > first TRP 1004, second PRS resource set 1012 > second TRP 1006, first PRS resource set 1014 > third TRP 1008, first PRS resource set 1018, etc. In some examples, if there are more than one PRS resource set with same number of PRS resources, the UE may select the PRS resource set based on their priority (e.g., from first PRS resource to last PRS resource or vice versa), or the UE may randomly select one. For example, if the first PRS resource set 1014 and the second PRS resource set 1016 of the second TRP 1006 both include four (4) PRS resources, the UE may be configured to select the first PRS resource set 1014 over the second PRS resource set 1016, or the UE may be configured to randomly select one of the first PRS resource set 1014 and the second PRS resource set 1016, etc. An advantage of this configuration is that with the smaller set measurement, a UE may be able to measure multiple TRPs faster as there may be less PRS resources for measurements. Then, the UE may filter out the TRP(s) which are not visible or not having channel conditions meeting a threshold, and the UE may move into a tracking mode and start measuring a smaller number of TRPs. For example, if after measuring the PRS resource set with least PRS resources from the first TRP 1004, the second TRP 1006, and the third TRP 1008, the UE may determine that the second TRP 1006 and the third TRP 1008 are more suitable for a positioning session (e.g., they have channel conditions above a threshold) and the first TRP 1004 does not have a good channel condition (e.g., it has a channel condition below the threshold). Thus, the UE may be configured to measure PRSs from the second TRP 1006 and the third TRP 1008 and skip measuring PRSs from the first TRP 1004 afterwards.

In another aspect of the present disclosure, instead of measuring all the PRS resource sets on higher priority TRP, a UE may be configured to measure one PRS resource set on each TRP first based on an SRS-PRS association. For example, the UE may be configured to measure a PRS resource set in a TRP that is closest in time to the UE's transmission of a corresponding SRS. In other words, the UE may be configured to divide or categorize the PRS resource sets in each TRP to multiple groups (e.g., two groups), where a first group (e.g., group 1) may include PRS resource set(s) which has the shorter time between PRS resources and SRS scheduling and a second group (e.g., group 2) may include a PRS resource set(s) which has the longer time between PRS resources and SRS scheduling. Then, the UE may be configured to measure the first group (e.g., group 1) first, and the UE may measure the second group (e.g., group 2) after measuring all the PRS resources in the first group. Similarly, priority between different PRS resource sets may be based on corresponding TRP priority (e.g., from a first TRP to a last TRP or vice versa).

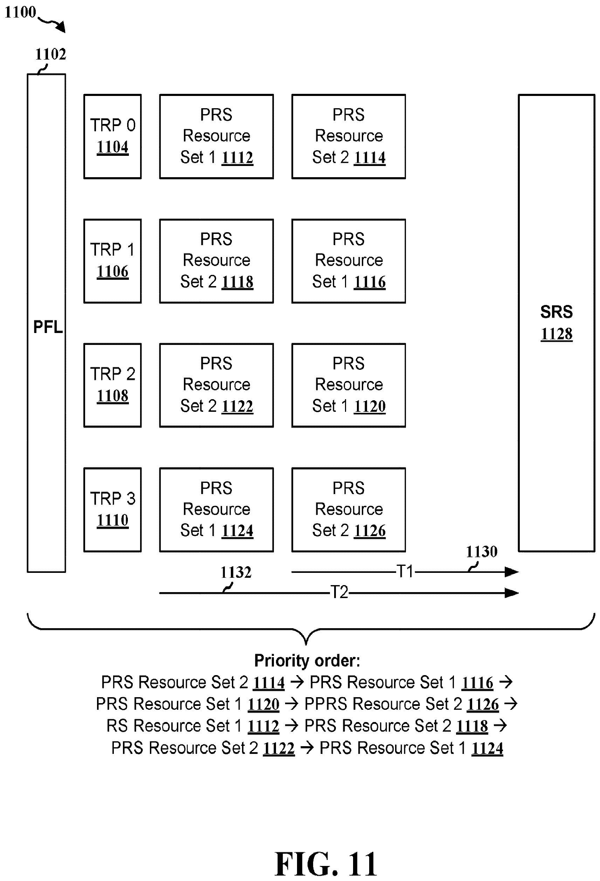

FIG. 11 is a diagram 1100 illustrating an example PRS prioritization associated with multiple PRS resource sets from multiple TRPs in a frequency layer in accordance with various aspects of the present disclosure. A UE may be configured to receive PRSs in a frequency layer 1102 transmitted from a first TRP 1104, a second TRP 1106, a third TRP 1108, and a fourth TRP 1110, where each TRP may transmit its PRSs via two PRS resource sets. For example, the first TRP 1104 may transmit PRSs based on a first PRS resource set 1112 and a second PRS resource set 1114, where the second PRS resource set 1114 may be closer in time to a transmission/scheduling of a corresponding SRS 1128 than the first PRS resource set 1112, such as shown at 1130 and 1132; the second TRP 1106 may transmit PRSs based on a first PRS resource set 1116 and a second PRS resource set 1118, where the first PRS resource set 1116 may be closer in time to the corresponding SRS 1128 than the second PRS resource set 1118; the third TRP 1108 may transmit PRSs based on a first PRS resource set 1120 and a second PRS resource set 1122, where the first PRS resource set 1120 may be closer in time to the corresponding SRS 1128 than the second PRS resource set 1122; and the fourth TRP 1110 may transmit PRSs based on a first PRS resource set 1124 and a second PRS resource set 1126, where the second PRS resource set 1126 may be closer in time to the corresponding SRS 1128 than the first PRS resource set 1124, etc.

Instead of measuring all the PRS resource sets on a one TRP before moving to a next TRP, the UE may measure the PRS resource set in each of the multiple TRPs that is closest in time to the corresponding SRS transmission (compared to other PRS resource set(s) in the same TRP) before measuring the other PRS resource set(s) in each of the multiple TRPs (e.g., PRS resource set(s) that is further away in time to the corresponding SRS transmission). In addition, the UE may also measure TRPs based on their associated priority, such as from a first TRP to a last TRP (e.g., TRP 1 to TRP 4) or vice versa (e.g., TRP 4 to TRP 1). For example, as shown by the diagram 1100, the UE may measure the PRSs in the PRS resource sets based on the following measurement scheduling: first TRP 1104, second PRS resource set 1114 > second TRP 1106, first PRS resource set 1116 > third TRP 1108, first PRS resource set 1120 > fourth TRP 1110, second PRS resource set 1126 > first TRP 1104, first PRS resource set 1112 > second TRP 1106, second PRS resource set 1118 > third TRP 1108, second PRS resource set 1122 > fourth TRP 1110, first PRS resource set 1124, etc.

One advantage with measuring the PRS resource set in each of the multiple TRPs that is closest in time to the corresponding SRS transmission is that the PRS resource set closer to the corresponding SRS in time may provide a better measurement accuracy compared to the PRS resource set that is further away to the corresponding SRS in time as the channel condition may be less likely to change. For example, if the first TRP 1104 is transmitting the first PRS resource set 1112 ten (10) ms prior to the UE's transmission of the SRS 1128 (e.g., T2 at 1132 equals 10 ms) and transmitting the second PRS resource set 1114 six (6) ms prior to the UE's transmission of the SRS 1128 (e.g., T1 at 1130 equals 6 ms), as a channel condition between the UE and the first TRP 1104 may be less likely to change in 6 ms compared to 10 ms, the second PRS resource set 1114 may provide a more accurate PRS measurement compared to the first PRS resource set 1112.

In another aspect of the present disclosure, instead of measuring all the PRS resource sets on higher priority TRP, a UE may be configured to measure one PRS resource set on each TRP first based on a beam width used by the TRP for transmitting the PRS resource set. For example, if a TRP is transmitting one or more PRS resource sets with a wider beam (e.g., a coarse beam) and transmitting one or more PRS resource sets with a narrower beam (e.g., a fine beam), the UE may be configured to prioritize measuring the PRS resource set which is transmitted with the narrower beam over measuring the PRS resource set which is transmitted with the wider beam, or the UE may be configured to prioritize measuring the PRS resource set which is transmitted with the wider beam over measuring the PRS resource set which is transmitted with the narrower beam. In other words, the UE may be configured to measure one PRS resource set from each of the multiple TRPs that is transmitted using a narrower beam or a wider beam before measuring another PRS resource set from each of the multiple TRPs that is transmitted using a different beam. Similarly, priority between different PRS resource sets may be based on corresponding TRP priority (e.g., from a first TRP to a last TRP or vice versa). In some examples, the UE may be configured to prioritize measuring PRS resources with wider beam during an initial acquisition phase, and the UE may be configured to prioritize measuring PRS resources with narrower beam during a tracking phase.

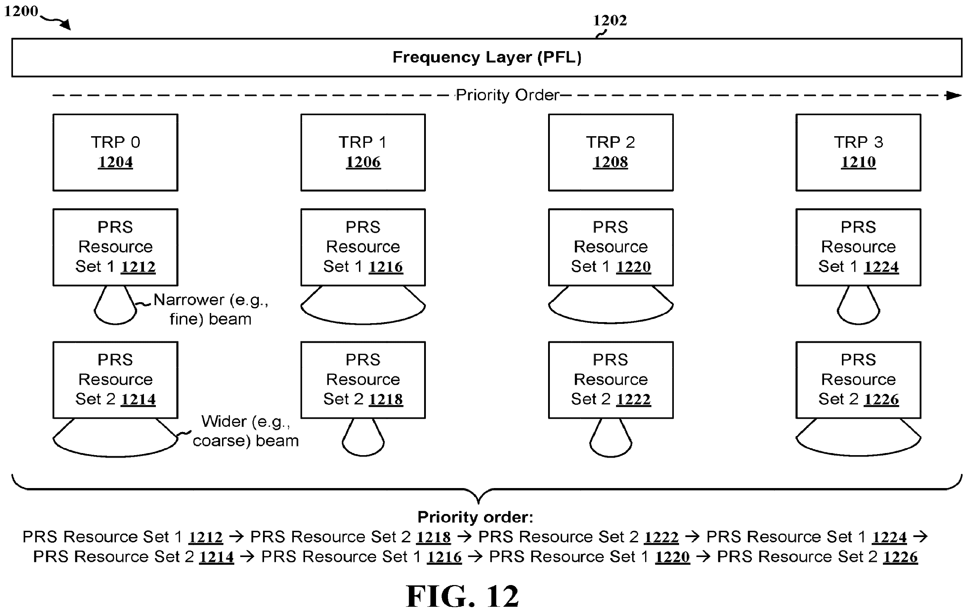

FIG. 12 is a diagram 1200 illustrating an example PRS prioritization associated with multiple PRS resource sets from multiple TRPs in a frequency layer in accordance with various aspects of the present disclosure. A UE may be configured to receive PRSs in a frequency layer 1202 transmitted from a first TRP 1204, a second TRP 1206, a third TRP 1208, and a fourth TRP 1210, where each TRP may transmit its PRSs via two PRS resource sets. For example, the first TRP 1204 may transmit PRSs based on a first PRS resource set 1212 and a second PRS resource set 1214, where the first PRS resource set 1212 may be transmitted using a narrower beam (e.g., a fine beam) compared to the beam used for transmitting the second PRS resource set 1214 (e.g., the second PRS resource set 1214 is transmitted using a wider/coarse beam).

The second TRP 1206 may transmit PRSs based on a first PRS resource set 1216 and a second PRS resource set 1218, where the first PRS resource set 1216 may be transmitted using a wider beam compared to the beam used for transmitting the second PRS resource set 1218 (e.g., the second PRS resource set 1218 is transmitted using a narrower/fine beam); the third TRP 1208 may transmit PRSs based on a first PRS resource set 1220 and a second PRS resource set 1222, where the first PRS resource set 1220 may be transmitted using a wider beam compared to the beam used for transmitting the second PRS resource set 1222 (e.g., the second PRS resource set 1222 is transmitted using a narrower/fine beam); and the fourth TRP 1210 may transmit PRSs based on a first PRS resource set 1224 and a second PRS resource set 1226, where the first PRS resource set 1224 may be transmitted using a narrower beam compared to the beam used for transmitting the second PRS resource set 1226 (e.g., the second PRS resource set 1226 is transmitted using a wider/coarse beam), etc.

In one example, instead of measuring all the PRS resource sets on a one TRP before moving to a next TRP, the UE may prioritize the PRS resource set which has finer beam PRS resources over wider beam PRS resources for each TRP. In addition, the UE may also measure PRS resource sets from different TRPs based on their associated TRP priority, such as from a first TRP to a last TRP (e.g., TRP 1 to TRP 4) or vice versa (e.g., TRP 4 to TRP 1). For example, as shown by the diagram 1200, the UE may measure the PRSs in the PRS resource sets based on the following measurement scheduling: first TRP 1204, first PRS resource set 1212 > second TRP 1206, second PRS resource set 1218 > third TRP 1208, second PRS resource set 1222 > fourth TRP 1210, first PRS resource set 1224 > first TRP 1204, second PRS resource set 1214 > second TRP 1206, first PRS resource set 1216 > third TRP 1208, first PRS resource set 1220 > fourth TRP 1210, second PRS resource set 1226, etc.

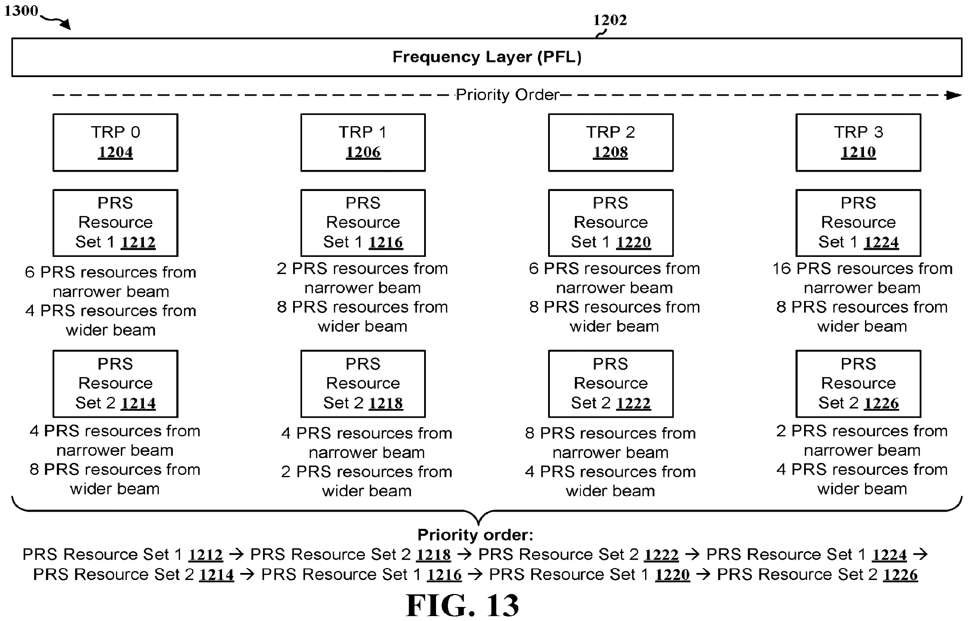

In another example, a TRP may transmit a first portion of PRS resources in a PRS resource set using a first beam (e.g., a wider beam or a narrower beam), and the TRP may transmit a second portion of PRS resources in the PRS resource set using a second beam that is different from the first beam (e.g., a wider beam or a narrower beam). In other words, the TRP may transmit a PRS resource set using multiple beams with different beam widths. In such an example, the UE may prioritize measuring the PRS resource set that have a higher number of narrower beam PRS resources or broader beam resources. For example, as shown by a diagram 1300 of FIG. 13, the first PRS resource set 1212 of the first TRP 1204 may have more PRS resources transmitted with a narrower beam than the second PRS resource set 1214 of the first TRP 1204 (e.g., 6 > 4); the second PRS resource set 1218 of the second TRP 1206 may have more PRS resources transmitted with a narrower beam than the first PRS resource set 1216 of the second TRP 1206 (e.g., 4 > 2); the second PRS resource set 1222 of the third TRP 1208 may have more PRS resources transmitted with a narrower beam than the first PRS resource set 1220 of the third TRP 1208 (e.g., 8 > 6); and the first PRS resource set 1224 of fourth TRP 1210 may have more PRS resources transmitted with a narrower beam than the second PRS resource set 1226 of the fourth TRP 1210 (e.g., 16 > 2), etc. In addition, the UE may also measure PRS resource sets from different TRPs based on their associated TRP priority, such as from a first TRP to a last TRP (e.g., TRP 1 to TRP 4) or vice versa (e.g., TRP 4 to TRP 1). Then, if the UE is configured to measure the PRS resource set with most PRS resources transmitted using a narrower beam (e.g., a fine beam), the UE may measure the PRSs in the PRS resource sets based on the following measurement scheduling: first TRP 1204, first PRS resource set 1212 > second TRP 1206, second PRS resource set 1218 > third TRP 1208, second PRS resource set 1222 > fourth TRP 1210, first PRS resource set 1224 > first TRP 1204, second PRS resource set 1214 > second TRP 1206, first PRS resource set 1216 > third TRP 1208, first PRS resource set 1220 > fourth TRP 1210, second PRS resource set 1226, etc. As such, the UE may prioritize its PRS measurements based at least in part on the beam width in which one or more PRSs are transmitted. IN some examples, for a UE-assisted positioning mode, a UE may have the notion of wider and narrower beam transmitted by the network (e.g., via indication from a serving base station and/or an LMF).

A UE and an LMF may be configured to support one PFL per positioning session. For example, a UE may broadcast its capability of supporting a maximum of one PFL. In response, the LMF may add one PFL related assistant data in a configured assistance data to the UE. However, in some scenarios, a base station may have an implementation of transmitting PRSs on multiple PFLs, and different base stations may have different PFL implementations. In addition, each PFL may be associated with a different number of TRPs, where one set of PFLs may have a smaller number of PRS TRPs (e.g., TRPs for transmitting PRSs, such as described in connection with FIGs. 7 to 13), whereas another set of PFLs may have more numbers of PRS TRPs, etc.

Aspects presented herein may enable a UE to determine which PFL to select if there are multiple PFLs available for the UE to choose, such that the selected PFL may be the best or most suitable PFL among the multiple PFLs for a positioning session.

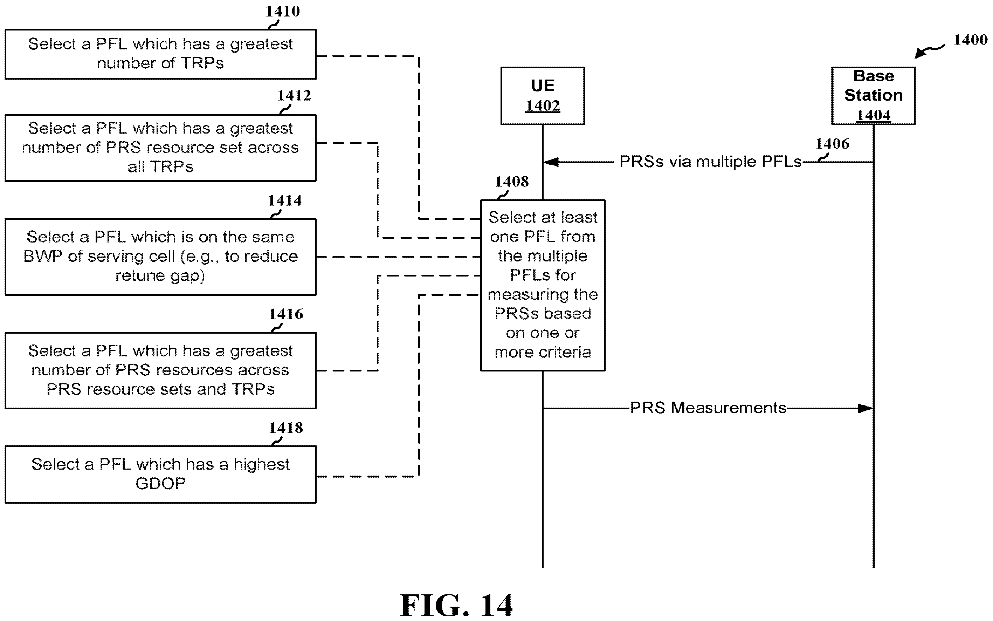

FIG. 14 is a communication flow 1400 illustrating an example of a UE selecting a PFL from a plurality of PFLs in accordance with various aspects of the present disclosure. The numberings associated with the communication flow 1400 do not specify a particular temporal order and are merely used as references for the communication flow 1400.

At 1406, a UE 1402 may receive a set of PRSs via multiple PFLs from a base station 1404, where each PFL may be associated with a number of TRPs, each TRP may be associated with a plurality of PRS resource sets, and each PRS resource set may include a plurality of PRS resources, such as described in connection with FIGs. 7 to 13.

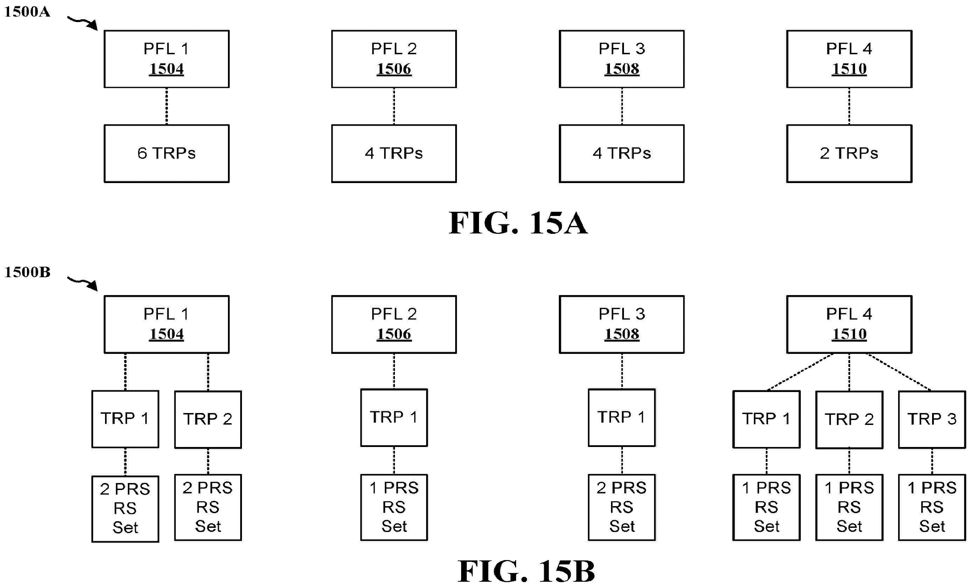

At 1408, the UE 1402 may select at least one PFL from the multiple PFLs for measuring the PRSs based on one or more criteria. For example, in one aspect of the present disclosure, as shown at 1410, the UE 1402 may be configured to select a PFL which has a greater number of TRPs. For example, as shown by a diagram 1500A of FIG. 15A, a base station (e.g., the base station 1404) may transmit a set of PRSs to a UE (e.g., the UE 1402) via a first PFL 1504, a second PFL 1506, a third PFL 1508, and a fourth PFL 1510 (collectively as the "four PFLs"). The first PFL 1504 may include PRSs transmitted from six (6) TRPs, the second PFL 1506 may include PRSs transmitted from four (4) TRPs, the third PFL 1508 may include PRSs transmitted from four (4) TRPs, and the fourth PFL 1506 may include PRSs transmitted from two (2) TRPs. If the UE is configured to select a PFL which has a greater number of TRPs, the UE may select the first PFL 1504 for PRS measurements as the first PFL 1504 has a highest number of TRPs among the four PFLs. In some examples, if there are more than one PFL with a same number of TRPs, then the UE 1402 may be configured to apply an additional PFL prioritization rule to the PFLs with a same number of TRPs (discussed below).

In another aspect of the present disclosure, as shown at 1412 of FIG. 14, the UE 1402 may be configured to select a PFL which has a greater number of PRS resource sets across all TRPs. For example, as shown by a diagram 1500B of FIG. 15B, a base station (e.g., the base station 1404) may transmit a set of PRSs to a UE (e.g., the UE 1402) via a first PFL 1504, a second PFL 1506, a third PFL 1508, and a fourth PFL 1510 (collectively as the "four PFLs"). The first PFL 1504 may include a first TRP that has two (2) PRS resource sets and a second TRP that has two (2) PRS resource sets (i.e., the first PFL 1504 has a total of four (4) PRS resource sets); the second PFL 1506 may include a first TRP that has one PRS resource set (i.e., the second PFL 1506 has a total of one PRS resource set); the third PFL 1508 may include a first TRP that has one PRS resource set (i.e., the third PFL 1508 has a total of one PRS resource set); and the fourth PFL 1510 may include a first TRP that has one (1) PRS resource set, a second TRP that has one (1) PRS resource set, and a third TRP that has one (1) PRS resource set (i.e., the fourth PFL 1510 has a total of three (3) PRS resource sets). If the UE is configured to select a PFL which has a greater number of PRS resource sets across all TRPs, the UE may select the first PFL 1504 for PRS measurements as the first PFL 1504 has a highest number of PRS resource sets across all TRPs. In some examples, if there are more than one PFL with a same number of PRS resource sets across all TRPs, then the UE 1402 may be configured to apply an additional PFL prioritization rule to the PFLs with a same number of PRS resource sets across all TRPs (discussed below).

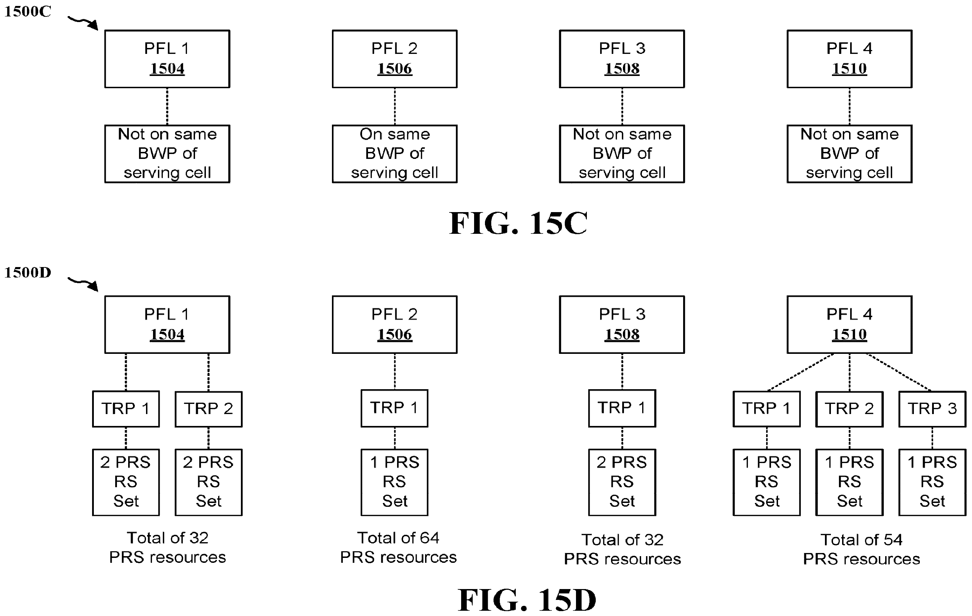

In another aspect of the present disclosure, as shown at 1414 of FIG. 14, the UE 1402 may be configured to select a PFL which is on the same BWP of serving cell. In some scenarios, when a PFL is on the same BWP of a serving cell, the UE may measure the PRSs on the PFL without or with a reduced number of BWP retunes (e.g., switching from one BWP to another BWP). As such, a number of retune gaps used by the UE may also be reduced or avoided. For example, as shown by a diagram 1500C of FIG. 15C, a base station (e.g., the base station 1404) may transmit a set of PRSs to a UE (e.g., the UE 1402) via a first PFL 1504, a second PFL 1506, a third PFL 1508, and a fourth PFL 1510 (collectively as the "four PFLs"). The first PFL 1504, the third PFL 1508, and the fourth PFL 1510 may be transmitted on BWP(s) that are different from the BWP of the serving cell, whereas the second PFL 1506 may be transmitted on the same BWP of the serving cell. If the UE is configured to select a PFL which is on the same BWP of serving cell, the UE may select the second PFL 1506 for PRS measurements as the second PFL 1506 is transmitted on the same BWP of the serving cell. In some examples, if there are more than one PFL that is transmitted on the same BWP of the serving cell, then the UE 1402 may be configured to apply an additional PFL prioritization rule to the PFLs transmitted on the same BWP of the serving cell (discussed below).

In another aspect of the present disclosure, as shown at 1416 of FIG. 14, the UE 1402 may be configured to select a PFL which has a greatest number of PRS resources across PRS resource sets and TRPs. For example, as shown by a diagram 1500D of FIG. 15D, a base station (e.g., the base station 1404) may transmit a set of PRSs to a UE (e.g., the UE 1402) via a first PFL 1504, a second PFL 1506, a third PFL 1508, and a fourth PFL 1510 (collectively as the "four PFLs"). The first PFL 1504 may include a first TRP that has two (2) PRS resource sets and a second TRP that has two (2) PRS resource sets, where the PRS resource sets from the first TRP and the second TRP may provide a total of thirty-two (32) PRS resources; the second PFL 1506 may include a first TRP that has one PRS resource set, where the one PRS resource set from the first TRP may provide sixty-four (64) PRS resources; the third PFL 1508 may include a first TRP that has one PRS resource set, where the one PRS resource set from the first TRP may provide thirty-two (32) PRS resources; and the fourth PFL 1510 may include a first TRP that has one (1) PRS resource set, a second TRP that has one (1) PRS resource set, and a third TRP that has one (1) PRS resource set, where the PRS resource sets from the first TRP, the second TRP, and the third TRP may provide a total of fifty-four (54) PRS resources. If the UE is configured to select a PFL which has a greatest number of PRS resources across PRS resource sets and TRPs, the UE may select the second PFL 1506 for PRS measurements as the second PFL 1506 has a greatest number of PRS resources across PRS resource sets and TRPs. In some examples, if there are more than one PFL with a same number of PRS resources across PRS resource sets and TRPs, then the UE 1402 may be configured to apply an additional PFL prioritization rule to the PFLs with a same number of PRS resources across PRS resource sets and TRPs (discussed below).

In some examples, the UE 1402 may be configured to apply a combination of prioritization rules discussed in connection with 1410, 1412, 1414, and 1416 and FIGs. 15A, 15B, 15C, and 15D, such as when there is a tie between two PFLs. In one example, the UE 1402 may be configured to apply all four prioritization rules discussed in connection with 1410, 1412, 1414, and 1416, where each prioritization rule may have a different priority from another prioritization rule. For example, the prioritization rule indicating that the UE should select a PFL with the greatest number of TRPs (e.g., discussed in connection with 1410 and FIG. 15A) may have a higher priority over the prioritization rule indicating that the UE should select a PFL with the greatest number of PRS resource sets across all TRPs (e.g., discussed in connection with 1412 and FIG. 15B); the prioritization rule indicating that the UE should select a PFL with the greatest number of PRS resource sets across all TRPs may have a higher priority over the prioritization rule indicating that the UE should select a PFL which is on the same BWP of serving cell (e.g., discussed in connection with 1414 and FIG. 15C); and the prioritization rule indicating that the UE should select a PFL which is on the same BWP of serving cell may have a higher priority over the prioritization rule indicating that the UE should select a PFL which has a greatest number of PRS resources across PRS resource sets and TRPs (e.g., discussed in connection with 1416 and FIG. 15D), etc. In other words, select a PFL with the greatest number of TRPs > select a PFL with the greatest number of PRS resource sets across all TRPs > select a PFL which is on the same BWP of serving cell > select a PFL which has a greatest number of PRS resources across PRS resource sets and TRPs. As such, if there are two PFLs with the same greatest number of TRPs, the UE 1402 may select one of these two PFLs depending on which PFL has a greatest number of PRS resource sets across all TRPs. If both of these two PFLs also have a same number of greatest number of PRS resource sets across all TRPs, the UE 1402 may select one of these two PFLs depending on which PFL is on the same BWP of serving cell, etc.

In some examples, aspects described in connection with FIG. 14 may be applied to a UE-assisted positioning, where the UE may apply the prioritization rules without the knowledge of the locations of the TRPs associated with each PFL. In some scenarios, such approach may not provide a best or a most suitable geometric dilution of precision (GDOP) at a server side (e.g., at the LMF and/or the serving base station).

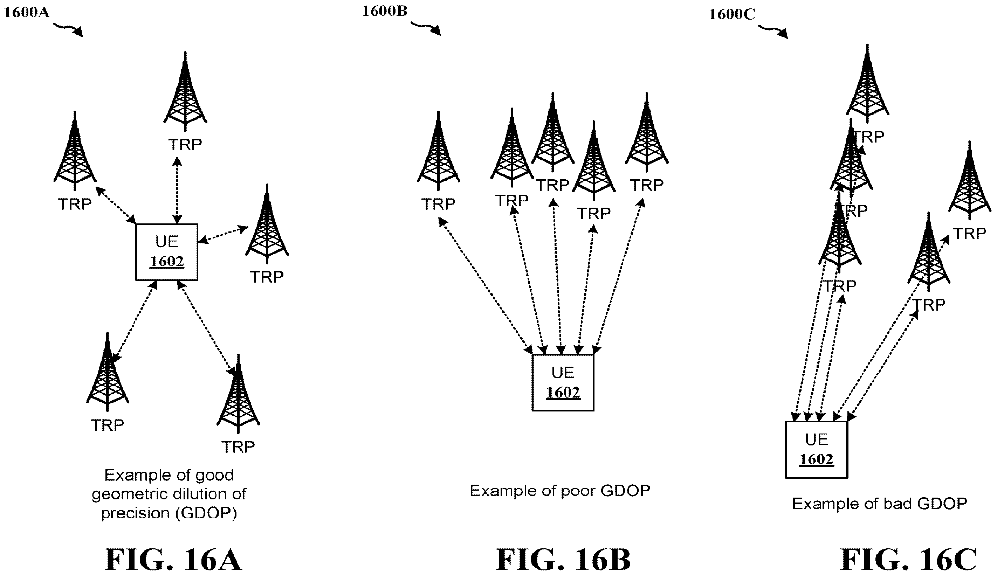

FIGs. 16A, 16B, and 16C are diagrams 1600A, 1600B, and 1600C illustrating examples of GDOP in accordance with various aspects of the present disclosure. GDOP may be an important parameter in a positioning estimate as it may be used to define the accuracy of the positioning estimate. For example, a good GDOP (e.g., a GDOP with a value above a GDOP threshold) may provide a high/higher accuracy positioning fix, whereas a poor/bad GDOP (e.g., a GDOP with a value below a GDOP threshold) may provide a low/lower accuracy positioning fix. As shown by the diagram 1600A, an example of a good GDOP may be where multiple TRPs are distributed around a UE 1602, such that the UE 1602 may exchange PRS and SRS with the multiple TRPs in multiple directions. As shown by the diagrams 1600B and 1600C, examples of poor/bad GDOP may be where multiple TRPs are not distributed around the UE 1602. For example, as shown by the diagram 1600B, the TRPs may allocate on one side of the UE 1602. In another example, as shown by the diagram 1600C, multiple TRPs may be in a line with the UE 1602, such that the UE 1602 may be communicating with multiple TRPs at a same direction.

Referring back to FIG. 14, in another aspect of the present disclosure, as shown at 1418 of FIG. 14, the UE 1402 may be configured to select a PFL which has a highest GDOP. In some scenarios, such as in a UE-based positioning session, a UE may be aware of all the TRP locations. The UE may also have a rough estimate of its locations, such as through enhanced cell identity (ECID) feature or the serving cell measurements. As such, the UE may be able to calculate GDOP for each of the multiple PFLs. For example, the UE 1402 is configured to receive PRSs from a first PFL, a second PFL and a third PFL, where the first PFL has a highest GDOP (e.g., similar to the diagram 1600A), the second PFL has a next highest GDOP (e.g., similar to the diagram 1600B), and the third PFL has a lowest GDOP (e.g., similar to the diagram 1600C). If the UE is configured to select a PFL which has a highest GDOP, the UE may select the first PFL for PRS measurements as the first PFL has the highest GDOP. Similarly, if there are more than one PFL that that has the highest (and the same) GDOP, then the UE 1402 may be configured to apply additional PFL prioritization rule(s) to the PFLs with the highest GDOP.

For examples, the UE 1402 may be configured to apply a combination of prioritization rules discussed in connection with 1410, 1412, 1414, 1416, and 1418, such as when there is a tie between two PFLs. In one example, the UE 1402 may be configured to apply all five prioritization rules discussed in connection with 1410, 1412, 1414, 1416, and 1418, where each prioritization rule may have a different priority from another prioritization rule. For example, the prioritization rule indicating that the UE should select a PFL which has a highest GDOP (e.g., discussed in connection with 1418) may have a higher priority over the prioritization rule indicating that the UE should select a PFL with the greatest number of TRPs (e.g., discussed in connection with 1410 and FIG. 15A); the prioritization rule indicating that the UE should select a PFL with the greatest number of TRPs may have a higher priority over the prioritization rule indicating that the UE should select a PFL with the greatest number of PRS resource sets across all TRPs (e.g., discussed in connection with 1412 and FIG. 15B); the prioritization rule indicating that the UE should select a PFL with the greatest number of PRS resource sets across all TRPs may have a higher priority over the prioritization rule indicating that the UE should select a PFL which is on the same BWP of serving cell (e.g., discussed in connection with 1414 and FIG. 15C); and the prioritization rule indicating that the UE should select a PFL which is on the same BWP of serving cell may have a higher priority over the prioritization rule indicating that the UE should select a PFL which has a greatest number of PRS resources across PRS resource sets and TRPs (e.g., discussed in connection with 1416 and FIG. 15D), etc. In other words, select a PFL with a highest GDOP > select a PFL with the greatest number of TRPs > select a PFL with the greatest number of PRS resource sets across all TRPs > select a PFL which is on the same BWP of serving cell > select a PFL which has a greatest number of PRS resources across PRS resource sets and TRPs. As such, if there are two PFLs with the same highest GDOP, the UE may select one of these two PFLs based on which PFL has a greatest number of TRPs. If these two PFLs also has the same greatest number of TRPs, the UE 1402 may select one of these two PFLs further depending on which PFL has a greatest number of PRS resource sets across all TRPs, etc.

In some examples, a UE may receive some PRSs from at least one base station and at least one sidelink (SL) device (e.g., another UE). For example, the UE may receive a set of PRSs transmitted from a base station via a UE-to-universal mobile telecommunications system (UMTS) terrestrial radio access network (UTRAN) (Uu) interface PFL (Uu PFL), and the UE may receive another set of PRSs transmitted from a sidelink device via an SL PFL. Aspects presented herein may enable a UE to determine how to prioritize PRS measurements when the UE is configured to receive PRSs from at least one Uu PFL and at least one SL PFL.

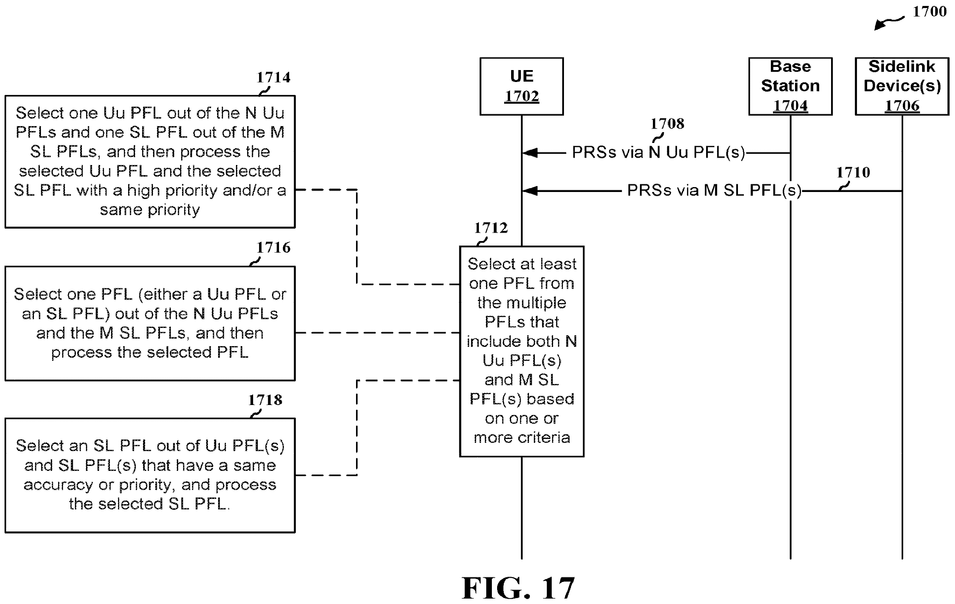

FIG. 17 is a communication flow 1700 illustrating an example of a UE selecting at least one PFL from a plurality of PFLs that include Uu PFL(s) and SL PFL(s) in accordance with various aspects of the present disclosure. The numberings associated with the communication flow 1700 do not specify a particular temporal order and are merely used as references for the communication flow 1700.

At 1708 and 1710, a UE 1702 may receive a first set of PRRs from a base station 1704 via at least one Uu PFL (e.g., via N Uu PFL(s), N being an integer), and the UE 1702 may also receive a second set of PRSs from at least one SL device 1706 (e.g., from one or more SL devices including the SL device 1706) via at least one SL PFL (e.g., via M SL PFL(s), M being an integer) for a positioning session. In some examples, an SL device that is assisting a UE in a positioning session may be referred to as an anchored UE or an anchor device, and the UE whose position is being estimated/determined may be referred to as a target UE or a target device. As such, the UE 1702 may be a target UE, and the at least one SL device 1706 may be an anchored UE.

In some aspect, for the SL, a UE (e.g., the UE 1702) may be aware of other SL devices' locations and their positioning accuracy, such as by exchanging SL messages with other SL devices and/or by decoding SL messages broadcasted/groupcasted from the other SL devices. As such, in one aspect of the present disclosure, the UE 1702 may be configured to prioritize the PFLs that include both N Uu PFL(s) and M SL PFL(s) based at least in part on a number of SL devices that are available for a positioning session and/or their positioning accuracy. In other words, the UE 1702 may prioritize the SL PFL over Uu PFL or vice versa depending on how many accurate SL UEs are available for the positing (e.g., SL UEs with an accuracy above an accuracy threshold).

At 1712, after receiving multiple PFLs that include N Uu PFL(s) and M SL PFL(s), the UE 1702 may be configured to select at least one PFL from the multiple PFLs based on one or more criteria.

In one aspect, as shown at 1714, the UE 1702 may be configured to select one Uu PFL out of the N Uu PFLs and select one SL PFL out of the M SL PFLs. Then, the UE 1702 may process the selected Uu PFL and the selected SL PFL with a high priority and/or with a same priority. For example, the UE 1702 may select a SL PFL among the M SL PFLs based at least in part on the selected SL PFL being transmitted from a sidelink device that has a highest positioning accuracy and/or the sidelink device's position is known with a good confidence (e.g., with a confidence level above a confidence threshold) among the at least one SL device 1706. In some scenarios, an anchored UE (e.g., the at least one SL device 1706) may provide better positioning results (compared to a base station/TRP) if the anchored UE is close to the target UE (e.g., the UE 1702), and/or the position of the anchored UE is known (e.g., by the target UE, or the LMF) with a good confidence (e.g., with a confidence level above a threshold). In another example, the UE 1702 may select a Uu PFL out of the N Uu PFLs based on a default prioritization rule, such as described in connection with FIG. 7, or based on one or more prioritization rules discussed in connection with FIGs. 8 to 16. For example, the UE 1702 may select a Uu PFL out of the N Uu PFLs based on the Uu PFL having a greatest number of TRPs among the N Uu PFLs, based on the Uu PFL having a greatest number of PRS resource sets across all TRPs among the N Uu PFLs, based on the Uu PFL being on the same BWP of the serving cell, based on the Uu PFL having a greatest number of PRS resources across PR resource sets and TRPs among the N Uu PFLs, and/or based on the Uu PFL having a highest GDOP among the N Uu PFLs, etc.

In another aspect, as shown at 1716, the UE 1702 may be configured to select one PFL (either a Uu PFL or an SL PFL) out of the N Uu PFL(s) and the M SL PFL(s). Then, the UE 1702 may process the selected PFL with a high priority. For example, if the position of one of the at least one SL device 1706 is known with a good confidence (e.g., the confidence level is above a confidence threshold) and/or the one of the at least one SL device 1706 has a positioning accuracy above an accuracy threshold, the UE 1702 may be configured to select the SL PFL associated with the one of the at least one SL device 1706 over the N Uu PFL(s) (and also over other unselected SL PFL(s)). On the other hand, if the position of the at least one SL device 1706 is not known with a good confidence (e.g., the confidence level is below a confidence threshold) and/or the at least one SL device 1706 has a positioning accuracy below an accuracy threshold, the UE 1702 may be configured to select a Uu PFL over the M SL PFL(s). In other words, the UE 1702 may give preference to Uu PFL over SL PFL. Similarly, the UE 1702 may select a Uu PFL out of the N Uu PFLs based on a default prioritization rule, such as described in connection with FIG. 7, or based on one or more prioritization rules discussed in connection with FIGs. 8 to 16. For example, the UE 1702 may select a Uu PFL out of the N Uu PFLs based on the Uu PFL having a greatest number of TRPs among the N Uu PFLs, based on the Uu PFL having a greatest number of PRS resource sets across all TRPs among the N Uu PFLs, based on the Uu PFL being on the same BWP of the serving cell, based on the Uu PFL having a greatest number of PRS resources across PR resource sets and TRPs among the N Uu PFLs, and/or based on the Uu PFL having a highest GDOP among the N Uu PFLs, etc.

In another aspect, as shown at 1718, if a Uu PFL has the same positioning accuracy as an SL PFL, the UE 1702 may further be configured to select the SL PFL over the Uu PFL, and the UE 1702 may process the selected SL PFL. In some examples, an advantage of a UE positioning session that is based on sidelink (e.g., based on measuring PRSs transmitted between sidelink devices) is that the UE may be getting its final positioning fixed with fewer SL measurements compare to Uu measurements. In another example, as a UE may typically be further away from TRPs/base stations compared to SL devices, it may take more power for the UE to transmit signals (e.g., SRSs) to the TRPs/bases station than for the UE to transmit signals (e.g., PRSs) to other SL devices. Thus, the UE may achieve a better power saving if the UE is configured to select an SL PFL over a Uu PFL if both PFLs provide the same or similar positioning accuracy.

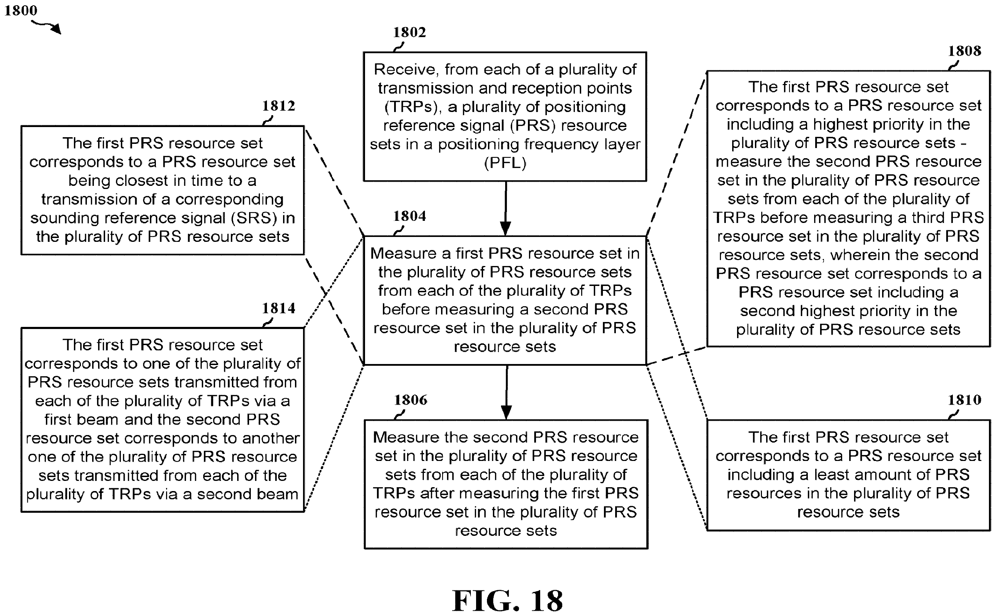

FIG. 18 is a flowchart 1800 of a method of wireless communication. The method may be performed by a UE or a component of a UE (e.g., the UE 104, 350, 404, 602, 1402, 1602, 1702; the apparatus 2002; a processing system, which may include the memory 360 and which may be the entire UE 350 or a component of the UE 350, such as the TX processor 368, the RX processor 356, and/or the controller/processor 359). The method may enable the UE to prioritize PRS measurements for TRPs within a frequency layer, PRS resource sets associated with a TRP, and/or PR resources within a PRS resource set based on one or more conditions. Aspects presented herein may improve UE positioning by enabling the UE to measure a set of PRSs in a more efficient order if the UE is unable to process all of the PRSs within the set.

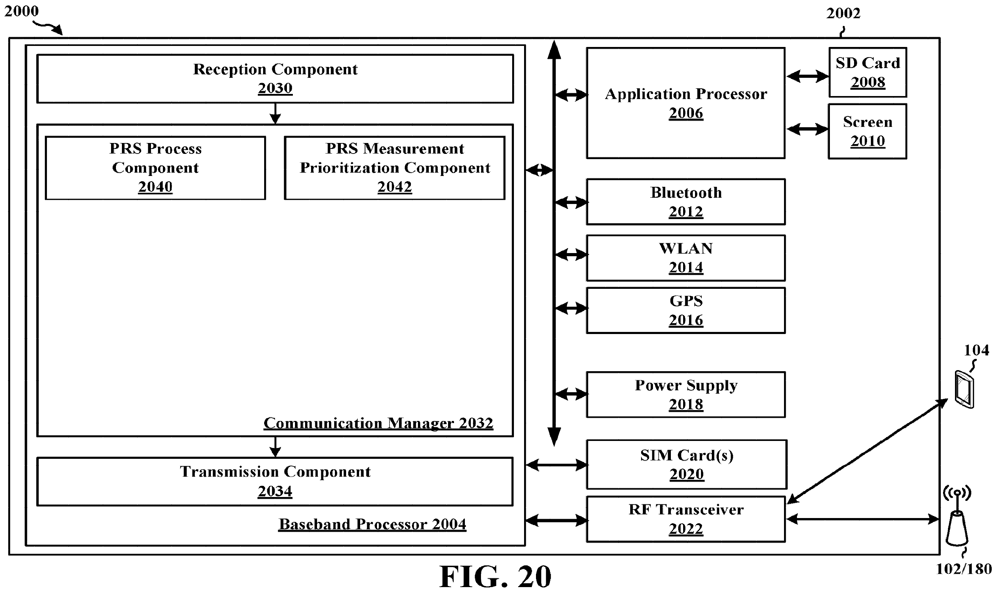

At 1802, the UE may receive, from each of a plurality of TRPs, a plurality of PRS resource sets in a PFL, such as described in connection with FIGs. 6 to 13. For example, as shown by the diagram 700 of FIG. 7, a UE may receive a plurality of PRS resource sets (e.g., 710, 712, 714) from multiple TRPs (e.g., 706, 708) via a frequency layer 702. The reception of the plurality of PRS resource sets may be performed by, e.g., the PRS process component 2040 and/or the reception component 2030 of the apparatus 2002 in FIG. 20.

At 1804, the UE may measure a first PRS resource set in the plurality of PRS resource sets from each of the plurality of TRPs before measuring a second PRS resource set in the plurality of PRS resource sets, such as described in connection with FIGs. 6 to 13. For example, as shown by the diagram 900 of FIG. 9, a UE may measure at least one PRS resource set with highest priority in each of the multiple TRPs first before measuring PRS resource set(s) with a second highest priority. The measurement of the PRS resource sets may be performed by, e.g., the PRS measurement prioritization component 2042 of the apparatus 2002 in FIG. 20. In one example, the first PRS resource set from each of the plurality of TRPs may be measured based on a priority associated with the plurality of TRPs.

At 1806, the UE may measure the second PRS resource set in the plurality of PRS resource sets from each of the plurality of TRPs after measuring the first PRS resource set in the plurality of PRS resource sets, such as described in connection with FIGs. 6 to 13. For example, as shown by the diagram 900 of FIG. 9, after the UE measures at least one PRS resource set with highest priority in each of the multiple TRPs, the UE may measure a second PRS resource set for each of the multiple TRPs that has a second highest priority. The measurement of the PRS resource sets may be performed by, e.g., the PRS measurement prioritization component 2042 of the apparatus 2002 in FIG. 20.

In one example, as shown at 1808, the first PRS resource set may correspond to a PRS resource set including a highest priority in the plurality of PRS resource sets, such as described in connection with FIG. 9. In such an example, the UE may measure the second PRS resource set in the plurality of PRS resource sets from each of the plurality of TRPs before measuring a third PRS resource set in the plurality of PRS resource sets, where the second PRS resource set corresponds to a PRS resource set including a second highest priority in the plurality of PRS resource sets.

In another example, as shown at 1810, the first PRS resource set may correspond to a PRS resource set including a least amount of PRS resources in the plurality of PRS resource sets, such as described in connection with FIG. 10.

In another example, as shown at 1812, the first PRS resource set may correspond to a PRS resource set being closest in time to a transmission of a corresponding SRS in the plurality of PRS resource sets, such as described in connection with FIG. 11.

In another example, as shown at 1814, the first PRS resource set may correspond to one of the plurality of PRS resource sets transmitted from each of the plurality of TRPs via a first beam and the second PRS resource may correspond to another one of the plurality of PRS resource sets transmitted from each of the plurality of TRPs via a second beam, such as described in connection with FIGs. 12 and 13. In one aspect, the first beam may be a narrow beam and the second beam is a wide beam, such that the first beam is narrower than the second beam. In another aspect, the UE may prioritize measuring the first PRS resource set over measuring the second PRS resource set.

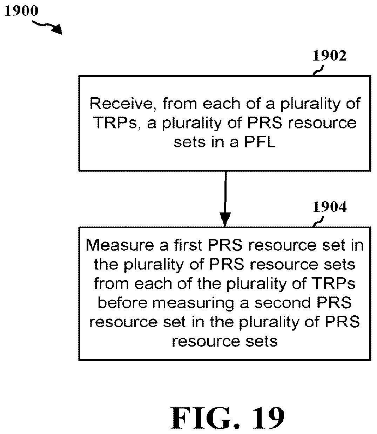

FIG. 19 is a flowchart 1900 of a method of wireless communication. The method may be performed by a UE or a component of a UE (e.g., the UE 104, 350, 404, 602, 1402, 1602, 1702; the apparatus 2002; a processing system, which may include the memory 360 and which may be the entire UE 350 or a component of the UE 350, such as the TX processor 368, the RX processor 356, and/or the controller/processor 359). The method may enable the UE to prioritize PRS measurements for TRPs within a frequency layer, PRS resource sets associated with a TRP, and/or PR resources within a PRS resource set based on one or more conditions. Aspects presented herein may improve UE positioning by enabling the UE to measure a set of PRSs in a more efficient order if the UE is unable to process all of the PRSs within the set.

At 1902, the UE may receive, from each of a plurality of TRPs, a plurality of PRS resource sets in a PFL, such as described in connection with FIGs. 6 to 13. For example, as shown by the diagram 700 of FIG. 7, a UE may receive a plurality of PRS resource sets (e.g., 710, 712, 714) from multiple TRPs (e.g., 706, 708) via a frequency layer 702. The reception of the plurality of PRS resource sets may be performed by, e.g., the PRS process component 2040 and/or the reception component 2030 of the apparatus 2002 in FIG. 20.

At 1904, the UE may measure a first PRS resource set in the plurality of PRS resource sets from each of the plurality of TRPs before measuring a second PRS resource set in the plurality of PRS resource sets, such as described in connection with FIGs. 6 to 13. For example, as shown by the diagram 900 of FIG. 9, a UE may measure at least one PRS resource set with highest priority in each of the multiple TRPs first before measuring PRS resource set(s) with a second highest priority. The measurement of the PRS resource sets may be performed by, e.g., the PRS measurement prioritization component 2042 of the apparatus 2002 in FIG. 20. In one example, the first PRS resource set from each of the plurality of TRPs may be measured based on a priority associated with the plurality of TRPs.

In one example, the UE may measure the second PRS resource set in the plurality of PRS resource sets from each of the plurality of TRPs after measuring the first PRS resource set in the plurality of PRS resource sets, such as described in connection with FIGs. 6 to 13. For example, as shown by the diagram 900 of FIG. 9, after the UE measures at least one PRS resource set with highest priority in each of the multiple TRPs, the UE may measure a second PRS resource set for each of the multiple TRPs that has a second highest priority. The measurement of the PRS resource sets may be performed by, e.g., the PRS measurement prioritization component 2042 of the apparatus 2002 in FIG. 20.

In another example, the first PRS resource set may correspond to a PRS resource set including a highest priority in the plurality of PRS resource sets, such as described in connection with FIG. 9. In such an example, the UE may measure the second PRS resource set in the plurality of PRS resource sets from each of the plurality of TRPs before measuring a third PRS resource set in the plurality of PRS resource sets, where the second PRS resource set corresponds to a PRS resource set including a second highest priority in the plurality of PRS resource sets.

In another example, the first PRS resource set may correspond to a PRS resource set including a least amount of PRS resources in the plurality of PRS resource sets, such as described in connection with FIG. 10.

In another example, the first PRS resource set may correspond to a PRS resource set being closest in time to a transmission of a corresponding SRS in the plurality of PRS resource sets, such as described in connection with FIG. 11.

In another example, the first PRS resource set may correspond to one of the plurality of PRS resource sets transmitted from each of the plurality of TRPs via a first beam and the second PRS resource set may correspond to another one of the plurality of PRS resource sets transmitted from each of the plurality of TRPs via a second beam, such as described in connection with FIGs. 12 and 13. In one aspect, the first beam may be a narrow beam and the second beam is a wide beam, such that the first beam is narrower than the second beam. In another aspect, the UE may prioritize measuring the first PRS resource set over measuring the second PRS resource set.

FIG. 20 is a diagram 2000 illustrating an example of a hardware implementation for an apparatus 2002. The apparatus 2002 may be a UE, a component of a UE, or may implement UE functionality. In some aspects, the apparatus2002 may include a baseband processor 2004 (also referred to as a modem) coupled to an RF transceiver 2022. In some aspects, the apparatus 2002 may further include one or more subscriber identity modules (SIM) cards 2020, an application processor 2006 coupled to a secure digital (SD) card 2008 and a screen 2010, a Bluetooth module 2012, a wireless local area network (WLAN) module 2014, a Global Positioning System (GPS) module 2016, or a power supply 2018. The baseband processor 2004 communicates through the RF transceiver 2022 with the UE 104 and/or BS 102/180. The baseband processor 2004 may include a computer-readable medium / memory. The computer-readable medium / memory may be non-transitory. The baseband processor 2004 is responsible for general processing, including the execution of software stored on the computer-readable medium / memory. The software, when executed by the baseband processor 2004, causes the baseband processor 2004 to perform the various functions described *supra.* The computer-readable medium / memory may also be used for storing data that is manipulated by the baseband processor 2004 when executing software. The baseband processor 2004 further includes a reception component 2030, a communication manager 2032, and a transmission component 2034. The communication manager 2032 includes the one or more illustrated components. The components within the communication manager 2032 may be stored in the computer-readable medium / memory and/or configured as hardware within the baseband processor 2004. The baseband processor 2004 may be a component of the UE 350 and may include the memory 360 and/or at least one of the TX processor 368, the RX processor 356, and the controller/processor 359. In one configuration, the apparatus 2002 may be a modem chip and include just the baseband processor 2004, and in another configuration, the apparatus 2002 may be the entire UE (e.g., see 350 of FIG. 3) and include the additional modules of the apparatus 2002.

The communication manager 2032 includes a PRS process component 2040 that is configured to receive, from each of a plurality of TRPs, a plurality of PRS resource sets in a PFL, e.g., as described in connection with 1802 of FIG. 18 and/or 1902 of FIG. 19. The communication manager 2032 further includes a PRS measurement prioritization component 2042 that is configured to measure a first PRS resource set in the plurality of PRS resource sets from each of the plurality of TRPs before measuring a second PRS resource set in the plurality of PRS resource sets, e.g., as described in connection with 1804 of FIG. 18 and/or 1904 of FIG. 19. The PRS measurement prioritization component 2042 may further be configured to measure the second PRS resource set in the plurality of PRS resource sets from each of the plurality of TRPs after measuring the first PRS resource set in the plurality of PRS resource sets, e.g., as described in connection with 1806 of FIG. 18.

The apparatus may include additional components that perform each of the blocks of the algorithm in the flowcharts of FIGs. 18 and 19. As such, each block in the flowcharts of FIGs. 18 and 19 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 2002 may include a variety of components configured for various functions. In one configuration, the apparatus 2002, and in particular the baseband processor 2004, includes means for receiving, from each of a plurality of TRPs, a plurality of PRS resource sets in a PFL (e.g., the PRS process component 2040 and/or the reception component 2030). The apparatus 2002 includes means for measuring a first PRS resource set in the plurality of PRS resource sets from each of the plurality of TRPs before measuring a second PRS resource set in the plurality of PRS resource sets (e.g., the PRS measurement prioritization component 2042). The apparatus 2002 includes means for measuring the second PRS resource set in the plurality of PRS resource sets from each of the plurality of TRPs after measuring the first PRS resource set in the plurality of PRS resource sets (e.g., the PRS measurement prioritization component 2042). The apparatus 2002 includes means for measuring the second PRS resource set in the plurality of PRS resource sets from each of the plurality of TRPs before measuring a third PRS resource set in the plurality of PRS resource sets, where the second PRS resource set corresponds to a PRS resource set including a second highest priority in the plurality of PRS resource sets (e.g., the PRS measurement prioritization component 2042). The apparatus 2002 includes means for prioritizing measuring the first subset of the plurality of PRS resource sets over measuring the second subset of the plurality of PRS resource sets (e.g., the PRS measurement prioritization component 2042).

In one configuration, the first PRS resource set from each of the plurality of TRPs may be measured based on a priority associated with the plurality of TRPs.

In another configuration, the first PRS resource set may correspond to a PRS resource set including a highest priority in the plurality of PRS resource sets.

In another configuration, the first PRS resource set may correspond to a PRS resource set including a least amount of PRS resources in the plurality of PRS resource sets.

In another configuration, the first PRS resource set may correspond to a PRS resource set being closest in time to a transmission of a corresponding SRS in the plurality of PRS resource sets.

In another configuration, the first PRS resource set may correspond to one of the plurality of PRS resource sets transmitted from each of the plurality of TRPs via a first beam and the second PRS resource set may correspond to another one of the plurality of PRS resource sets transmitted from each of the plurality of TRPs via a second beam, such as described in connection with FIGs. 12 and 13. In such a configuration, the first beam may be a narrow beam and the second beam is a wide beam, such that the first beam is narrower than the second beam. In such a configuration, the apparatus 2002 includes means for prioritizing measuring the first PRS resource set over measuring the second PRS resource set.

The means may be one or more of the components of the apparatus 2002 configured to perform the functions recited by the means. As described *supra,* the apparatus 2002 may include the TX Processor 368, the RX Processor 356, and the controller/processor 359. As such, in one configuration, the means may be the TX Processor 368, the RX Processor 356, and the controller/processor 359 configured to perform the functions recited by the means.

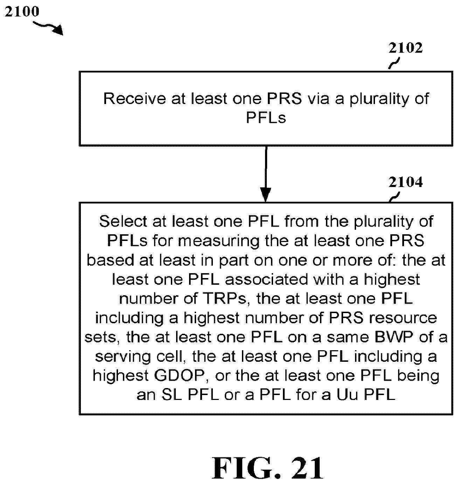

FIG. 21 is a flowchart 2100 of a method of wireless communication. The method may be performed by a UE or a component of a UE (e.g., the UE 104, 350, 404, 602, 1402, 1602, 1702; the apparatus 2202; a processing system, which may include the memory 360 and which may be the entire UE 350 or a component of the UE 350, such as the TX processor 368, the RX processor 356, and/or the controller/processor 359). The method may enable the UE to prioritize PRS measurements for multiple PFLs TRPs within a frequency layer, PRS resource sets associated with a TRP, and/or PR resources within a PRS resource set based on one or more conditions.

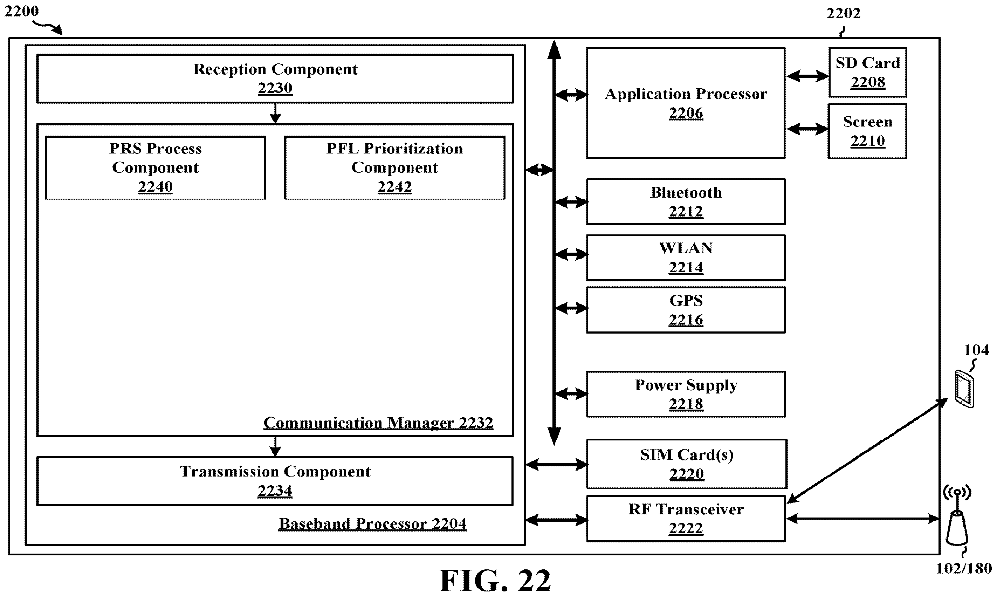

At 2102, the UE may receive at least one PRS via a plurality of PFLs, such as described in connection with FIGs. 14 to 17. For example, at 1406 of FIG. 14, the UE 1402 may receive PRSs via multiple PFLs from the base station 1404. The reception of the at least one PRS via a plurality of PFLs may be performed by, e.g., the PRS process component 2240 and/or the reception component 2230 of the apparatus 2202 in FIG. 22.

At 2104, the UE may select at least one PFL from the plurality of PFLs for measuring the at least one PRS based at least in part on one or more of: the at least one PFL associated with a highest number of TRPs, the at least one PFL including a highest number of PRS resource sets, the at least one PFL on a same BWP of a serving cell, the at least one PFL including a highest GDOP, or the at least one PFL being an SL PFL or a PFL for a Uu PFL, such as described in connection with FIGs. 14 to 17. For example, as shown at 1410, 1412, 1414, 1416, and 1418 of FIG. 14, the UE 1402 may select at least one PFL from multiple PFLs for measuring the PRSs based at least in part on one or more of: the at least one PFL associated with a highest number of TRPs, the at least one PFL including a highest number of PRS resource sets, the at least one PFL on a same BWP of a serving cell, the at least one PFL including a highest GDOP, and/or the at least one PFL being an SL PFL or a PFL for a Uu PFL. The selection of the PFL may be performed by, e.g., the PFL prioritization component 2242 of the apparatus 2202 in FIG. 22.

In one example, the at least one PFL associated with the highest number of TRPs may have a priority over the at least one PFL including the highest number of PRS resource sets, and the at least one PFL including the highest number of PRS resource sets may have a priority over the at least one PFL on the same BWP of the serving cell. In such an example, the plurality of PFLs may be associated with a UE-assisted positioning session.

In another example, the at least one PFL including the highest GDOP may have a priority over the at least one PFL associated with the highest number of TRPs, the at least one PFL associated with the highest number of TRPs may have a priority over the at least one PFL including the highest number of PRS resource sets, and the at least one PFL including the highest number of PRS resource sets may have a priority over the at least one PFL on the same BWP of the serving cell. In such an example, the plurality of PFLs may be associated with a UE-based positioning session.

In another example, the plurality of PFLs may include at least one SL PFL and at least one Uu PFL, such as described in connection with FIG. 17. In one example, the UE may select the at least one SL PFL for the PFL if a number of sidelink devices associated with the least one SL PFL is greater than a device threshold or one or more sidelink devices associated with the least one SL PFL include a position confidence above a confidence threshold, and the UE may select the at least one Uu PFL for the PFL if the number of sidelink devices associated with the at least one SL PFL is less than or equal to the device threshold or the one or more sidelink devices associated with the at least one SL PFL include the position confidence less than or equal to the confidence threshold. In another example, the at least one PFL may include the SL PFL and the Uu PFL, and the UE may measure the SL PFL and the Uu PFL with a same priority. In another example, the at least one PFL may include either the SL PFL or the Uu PFL, and the UE may measure either the SL PFL or the Uu PFL based on a priority.

FIG. 22 is a diagram 2200 illustrating an example of a hardware implementation for an apparatus 2202. The apparatus 2202 may be a UE, a component of a UE, or may implement UE functionality. In some aspects, the apparatus2202 may include a baseband processor 2204 (also referred to as a modem) coupled to an RF transceiver 2222. In some aspects, the apparatus 2202 may further include one or more subscriber identity modules (SIM) cards 2220, an application processor 2206 coupled to a secure digital (SD) card 2208 and a screen 2210, a Bluetooth module 2212, a wireless local area network (WLAN) module 2214, a Global Positioning System (GPS) module 2216, or a power supply 2218. The baseband processor 2204 communicates through the RF transceiver 2222 with the UE 104 and/or BS 102/180. The baseband processor 2204 may include a computer-readable medium / memory. The computer-readable medium / memory may be non-transitory. The baseband processor 2204 is responsible for general processing, including the execution of software stored on the computer-readable medium / memory. The software, when executed by the baseband processor 2204, causes the baseband processor 2204 to perform the various functions described *supra.* The computer-readable medium / memory may also be used for storing data that is manipulated by the baseband processor 2204 when executing software. The baseband processor 2204 further includes a reception component 2230, a communication manager 2232, and a transmission component 2234. The communication manager 2232 includes the one or more illustrated components. The components within the communication manager 2232 may be stored in the computer-readable medium / memory and/or configured as hardware within the baseband processor 2204. The baseband processor 2204 may be a component of the UE 350 and may include the memory 360 and/or at least one of the TX processor 368, the RX processor 356, and the controller/processor 359. In one configuration, the apparatus 2202 may be a modem chip and include just the baseband processor 2204, and in another configuration, the apparatus 2202 may be the entire UE (e.g., see 350 of FIG. 3) and include the additional modules of the apparatus 2202.

The communication manager 2232 includes a PRS process component 2240 that is configured to receive at least one PRS via a plurality of PFLs, e.g., as described in connection with 2102 of FIG. 21. The communication manager 2232 further includes a PFL prioritization component 2242 that is configured to select at least one PFL from the plurality of PFLs for measuring the at least one PRS based at least in part on one or more of: the at least one PFL associated with a highest number of TRPs, the at least one PFL including a highest number of PRS resource sets, the at least one PFL on a same BWP of a serving cell, the at least one PFL including a highest GDOP, or the at least one PFL being an SL PFL or a PFL for a Uu PFL, e.g., as described in connection with 2104 of FIG. 21.

The apparatus may include additional components that perform each of the blocks of the algorithm in the flowchart of FIG. 21. As such, each block in the flowchart of FIG. 21 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 2202 may include a variety of components configured for various functions. In one configuration, the apparatus 2202, and in particular the baseband processor 2204, includes means for receiving at least one PRS via a plurality of PFLs (e.g., the PRS process component 2240 and/or the reception component 2230). The apparatus 2202 includes means for selecting at least one PFL from the plurality of PFLs for measuring the at least one PRS based at least in part on one or more of: the at least one PFL associated with a highest number of TRPs, the at least one PFL including a highest number of PRS resource sets, the at least one PFL on a same BWP of a serving cell, the at least one PFL including a highest GDOP, or the at least one PFL being an SL PFL or a PFL for a Uu PFL (e.g., the PFL prioritization component 2242).

In one configuration, the at least one PFL associated with the highest number of TRPs may have a priority over the at least one PFL including the highest number of PRS resource sets, and the at least one PFL including the highest number of PRS resource sets may have a priority over the at least one PFL on the same BWP of the serving cell. In such a configuration, the plurality of PFLs may be associated with a UE-assisted positioning session.

In another configuration, the at least one PFL including the highest GDOP may have a priority over the at least one PFL associated with the highest number of TRPs, the at least one PFL associated with the highest number of TRPs may have a priority over the at least one PFL including the highest number of PRS resource sets, and the at least one PFL including the highest number of PRS resource sets may have a priority over the at least one PFL on the same BWP of the serving cell. In such a configuration, the plurality of PFLs may be associated with a UE-based positioning session.

In another configuration, the plurality of PFLs may include at least one SL PFL and at least one Uu PFL, such as described in connection with FIG. 17. In one configuration, the apparatus 2202 includes means for selecting the at least one SL PFL for the PFL if a number of sidelink devices associated with the least one SL PFL is greater than a device threshold or one or more sidelink devices associated with the least one SL PFL include a position confidence above a confidence threshold, and means for selecting the at least one Uu PFL for the PFL if the number of sidelink devices associated with the at least one SL PFL is less than or equal to the device threshold or the one or more sidelink devices associated with the at least one SL PFL include the position confidence less than or equal to the confidence threshold.

In another configuration, the at least one PFL may include the SL PFL and the Uu PFL, and the apparatus 2202 includes means for measuring the SL PFL and the Uu PFL with a same priority.

In another configuration, the at least one PFL may include either the SL PFL or the Uu PFL, and the apparatus 2202 includes means for measuring either the SL PFL or the Uu PFL based on a priority.

The means may be one or more of the components of the apparatus 2202 configured to perform the functions recited by the means. As described *supra,* the apparatus 2202 may include the TX Processor 368, the RX Processor 356, and the controller/processor 359. As such, in one configuration, the means may be the TX Processor 368, the RX Processor 356, and the controller/processor 359 configured to perform the functions recited by the means.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

The following aspects are illustrative only and may be combined with other aspects or teachings described herein, without limitation.

Aspect 1 is an apparatus for wireless communication including at least one processor coupled to a memory and a transceiver and configured to receive, from each of a plurality of TRPs, a plurality of PRS resource sets in a PFL; and measure a first PRS resource set in the plurality of PRS resource sets from each of the plurality of TRPs before measuring a second PRS resource set in the plurality of PRS resource sets.

Aspect 2 is the apparatus of aspect 1, where the first PRS resource set corresponds to a PRS resource set including a highest priority in the plurality of PRS resource sets.

Aspect 3 is the apparatus of any of aspects 1 and 2, where the at least one processor is further configured to: measure the second PRS resource set in the plurality of PRS resource sets from each of the plurality of TRPs before measuring a third PRS resource set in the plurality of PRS resource sets, where the second PRS resource set corresponds to a PRS resource set including a second highest priority in the plurality of PRS resource sets.

Aspect 4 is the apparatus of any of aspects 1 to 3, where the first PRS resource set corresponds to a PRS resource set including a least amount of PRS resources in the plurality of PRS resource sets.

Aspect 5 is the apparatus of any of aspects 1 to 4, where the first PRS resource set corresponds to a PRS resource set being closest in time to a transmission of a corresponding SRS in the plurality of PRS resource sets.

Aspect 6 is the apparatus of any of aspects 1 to 5, where the at least one processor is further configured to: measure the second PRS resource set in the plurality of PRS resource sets from each of the plurality of TRPs after measuring the first PRS resource set in the plurality of PRS resource sets.

Aspect 7 is the apparatus of any of aspects 1 to 6, where the first PRS resource set corresponds to one of the plurality of PRS resource sets transmitted from each of the plurality of TRPs via a first beam and the second PRS resource set corresponds to another one of the plurality of PRS resource sets transmitted from each of the plurality of TRPs via a second beam.

Aspect 8 is the apparatus of any of aspects 1 to 7, where the first beam is a narrow beam and the second beam is a wide beam, such that the first beam is narrower than the second beam.

Aspect 9 is the apparatus of any of aspects 1 to 8, where the at least one processor is further configured to: prioritize measuring the first PRS resource set over measuring the second PRS resource set.

Aspect 10 is the apparatus of any of aspects 1 to 9, where the first PRS resource set from each of the plurality of TRPs is measured based on a priority associated with the plurality of TRPs.

Aspect 11 is a method of wireless communication for implementing any of aspects 1 to 10.

Aspect 11-A is a method of wireless communication at a user equipment (UE), comprising: receiving, from each of a plurality of transmission and reception points (TRPs), a plurality of positioning reference signal (PRS) resource sets in a positioning frequency layer (PFL); and measuring a first PRS resource set in the plurality of PRS resource sets from each of the plurality of TRPs before measuring a second PRS resource set in the plurality of PRS resource sets.

Aspect 11-B is the method of aspect 11-A, wherein the first PRS resource set corresponds to a PRS resource set including a highest priority in the plurality of PRS resource sets.

Aspect 11-C is the method of aspect 11-A, further comprising: measuring the second PRS resource set in the plurality of PRS resource sets from each of the plurality of TRPs before measuring a third PRS resource set in the plurality of PRS resource sets, wherein the second PRS resource set corresponds to a PRS resource set including a second highest priority in the plurality of PRS resource sets.

Aspect 11-D is the method of aspect 11-A, wherein the first PRS resource set corresponds to a PRS resource set including a least amount of PRS resources in the plurality of PRS resource sets.

Aspect 11-E is the method of aspect 11-A, wherein the first PRS resource set corresponds to a PRS resource set being closest in time to a transmission of a corresponding sounding reference signal (SRS) in the plurality of PRS resource sets.

Aspect 11-F is the method of aspect 11-A, further comprising: measuring the second PRS resource set in the plurality of PRS resource sets from each of the plurality of TRPs after measuring the first PRS resource set in the plurality of PRS resource sets.

Aspect 11-G is the method of aspect 11-A, wherein the first PRS resource set corresponds to one of the plurality of PRS resource sets transmitted from each of the plurality of TRPs via a first beam and the second PRS resource set corresponds to another one of the plurality of PRS resource sets transmitted from each of the plurality of TRPs via a second beam.

Aspect 11-H is the method of aspect 11-G, wherein the first beam is a narrow beam and the second beam is a wide beam, such that the first beam is narrower than the second beam.

Aspect 11-I is the method of claim aspect 11-H, further comprising: prioritizing measuring the first PRS resource set over measuring the second PRS resource set.

Aspect 11-J is the method of aspect 11-A, wherein the first PRS resource set from each of the plurality of TRPs is measured based on a priority associated with the plurality of TRPs.

Aspect 12 is an apparatus for wireless communication including means for implementing any of aspects 1 to 10.

Aspect 13 is a computer-readable medium storing computer executable code, where the code when executed by a processor causes the processor to implement any of aspects 1 to 10.

Aspect 14 is an apparatus for wireless communication including at least one processor coupled to a memory and a transceiver and configured to receive at least one PRS via a plurality of PFLs; and select at least one PFL from the plurality of PFLs for measuring the at least one PRS based at least in part on one or more of: the at least one PFL associated with a highest number of TRPs, the at least one PFL including a highest number of PRS resource sets, the at least one PFL on a same BWP of a serving cell, the at least one PFL including a highest GDOP, or the at least one PFL being an SL PFL or a PFL for a Uu PFL.

Aspect 15 is the apparatus of aspect 14, where the at least one PFL associated with the highest number of TRPs has priority over the at least one PFL including the highest number of PRS resource sets, and where the at least one PFL including the highest number of PRS resource sets has priority over the at least one PFL on the same BWP of the serving cell.

Aspect 16 is the apparatus of any of aspects 14 and 15, where the plurality of PFLs is associated with a UE-assisted positioning session.

Aspect 17 is the apparatus of any of aspects 14 to 16, where the at least one PFL including the highest GDOP has priority over the at least one PFL associated with the highest number of TRPs, the at least one PFL associated with the highest number of TRPs has priority over the at least one PFL including the highest number of PRS resource sets, and the at least one PFL including the highest number of PRS resource sets has priority over the at least one PFL on the same BWP of the serving cell.

Aspect 18 is the apparatus of any of aspects 14 to 17, where the plurality of PFLs is associated with a UE-based positioning session.

Aspect 19 is the apparatus of any of aspects 14 to 18, where the plurality of PFLs includes at least one SL PFL and at least one Uu PFL.

Aspect 20 is the apparatus of any of aspects 14 to 19, where the at least one processor is further configured to: select the at least one SL PFL for the PFL if a number of sidelink devices associated with the least one SL PFL is greater than a device threshold or one or more sidelink devices associated with the least one SL PFL include a position confidence above a confidence threshold; and select the at least one Uu PFL for the PFL if the number of sidelink devices associated with the at least one SL PFL is less than or equal to the device threshold or the one or more sidelink devices associated with the at least one SL PFL include the position confidence less than or equal to the confidence threshold.

Aspect 21 is the apparatus of any of aspects 14 to 20, where the at least one PFL includes the SL PFL and the Uu PFL, the at least one processor is further configured to: measure the SL PFL and the Uu PFL with a same priority.

Aspect 22 is the apparatus of any of aspects 14 to 21, where the at least one PFL includes either the SL PFL or the Uu PFL, the at least one processor is further configured to: measure either the SL PFL or the Uu PFL based on a priority.

Aspect 23 is a method of wireless communication for implementing any of aspects 14 to 22.

Aspect 23-A is a method of wireless communication at a user equipment (UE), comprising: receiving at least one positioning reference signal (PRS) via a plurality of positioning frequency layers (PFLs); and selecting at least one PFL from the plurality of PFLs for measuring the at least one PRS based at least in part on one or more of: i) the at least one PFL associated with a highest number of transmission and reception points (TRPs), ii) the at least one PFL including a highest number of PRS resource sets, iii) the at least one PFL on a same bandwidth part (BWP) of a serving cell, iv) the at least one PFL including a highest geometric dilution of precision (GDOP), or v) the at least one PFL being a sidelink (SL) PFL or a PFL for a UE-to-universal mobile telecommunications system (UMTS) terrestrial radio access network (UTRAN) (Uu) interface (Uu PFL).

Aspect 23-B is the method of aspect 23-A, wherein the at least one PFL associated with the highest number of TRPs has priority over the at least one PFL including the highest number of PRS resource sets, and wherein the at least one PFL including the highest number of PRS resource sets has priority over the at least one PFL on the same BWP of the serving cell.

Aspect 23-C is the method of aspect 23-A, wherein the at least one PFL including the highest GDOP has priority over the at least one PFL associated with the highest number of TRPs, the at least one PFL associated with the highest number of TRPs has priority over the at least one PFL including the highest number of PRS resource sets, and the at least one PFL including the highest number of PRS resource sets has priority over the at least one PFL on the same BWP of the serving cell.

Aspect 23-D is the method of aspect 23-A, wherein the plurality of PFLs includes at least one SL PFL and at least one Uu PFL.

Aspect 23-E is the method of aspect 23-A, further comprising: selecting the at least one SL PFL for the PFL if a number of sidelink devices associated with the least one SL PFL is greater than a device threshold or one or more sidelink devices associated with the least one SL PFL include a position confidence above a confidence threshold; and selecting the at least one Uu PFL for the PFL if the number of sidelink devices associated with the at least one SL PFL is less than or equal to the device threshold or the one or more sidelink devices associated with the at least one SL PFL include the position confidence less than or equal to the confidence threshold.

Aspect 24 is an apparatus for wireless communication including means for implementing any of aspects 14 to 22.

Aspect 25 is a computer-readable medium storing computer executable code, where the code when executed by a processor causes the processor to implement any of aspects 14 to 22.

## Claims

1. An apparatus for wireless communication at a user equipment (UE), comprising:
a memory;
a transceiver; and
at least one processor communicatively connected to the memory and the transceiver, the at least one processor configured to:
receive at least one positioning reference signal (PRS) via a plurality of positioning frequency layers (PFLs); and
select at least one PFL from the plurality of PFLs for measuring the at least one PRS based at least in part on one or more of:
• the at least one PFL associated with a highest number of transmission and reception points (TRPs),
• the at least one PFL including a highest number of PRS resource sets,
• the at least one PFL on a same bandwidth part (BWP) of a serving cell,
• the at least one PFL including a highest geometric dilution of precision (GDOP), or
• the at least one PFL being a sidelink (SL) PFL or a PFL for a UE-to-universal mobile telecommunications system (UMTS) terrestrial radio access network (UTRAN) (Uu) interface (Uu PFL).

2. The apparatus of claim 1, wherein the at least one PFL associated with the highest number of TRPs has priority over the at least one PFL including the highest number of PRS resource sets, and wherein the at least one PFL including the highest number of PRS resource sets has priority over the at least one PFL on the same BWP of the serving cell.

3. The apparatus of claim 1, wherein the plurality of PFLs is associated with a UE-assisted positioning session.

4. The apparatus of claim 1, wherein the at least one PFL including the highest GDOP has priority over the at least one PFL associated with the highest number of TRPs, the at least one PFL associated with the highest number of TRPs has priority over the at least one PFL including the highest number of PRS resource sets, and the at least one PFL including the highest number of PRS resource sets has priority over the at least one PFL on the same BWP of the serving cell.

5. The apparatus of claim 1, wherein the plurality of PFLs is associated with a UE-based positioning session.

6. The apparatus of claim 1, wherein the plurality of PFLs includes at least one SL PFL and at least one Uu PFL.

7. The apparatus of claim 6, wherein the at least one processor is further configured to:
select the at least one SL PFL for the PFL if a number of sidelink devices associated with the least one SL PFL is greater than a device threshold or one or more sidelink devices associated with the least one SL PFL include a position confidence above a confidence threshold; and
select the at least one Uu PFL for the PFL if the number of sidelink devices associated with the at least one SL PFL is less than or equal to the device threshold or the one or more sidelink devices associated with the at least one SL PFL include the position confidence less than or equal to the confidence threshold.

8. The apparatus of claim 7, wherein the plurality of PFLs includes a SL PFL and a Uu PFL, and the at least one processor is further configured to: measure the SL PFL and the Uu PFL with a same priority.

9. A method of wireless communication at a user equipment (UE), comprising:
receiving at least one positioning reference signal (PRS) via a plurality of positioning frequency layers (PFLs); and
selecting at least one PFL from the plurality of PFLs for measuring the at least one PRS based at least in part on one or more of:
• the at least one PFL associated with a highest number of transmission and reception points (TRPs),
• the at least one PFL including a highest number of PRS resource sets,
• the at least one PFL on a same bandwidth part (BWP) of a serving cell,
• the at least one PFL including a highest geometric dilution of precision (GDOP), or
• the at least one PFL being a sidelink (SL) PFL or a PFL for a UE-to-universal mobile telecommunications system (UMTS) terrestrial radio access network (UTRAN) (Uu) interface (Uu PFL).

10. The method of claim 9, wherein the at least one PFL associated with the highest number of TRPs has priority over the at least one PFL including the highest number of PRS resource sets, and wherein the at least one PFL including the highest number of PRS resource sets has priority over the at least one PFL on the same BWP of the serving cell.

11. The method of claim 9, wherein the at least one PFL including the highest GDOP has priority over the at least one PFL associated with the highest number of TRPs, the at least one PFL associated with the highest number of TRPs has priority over the at least one PFL including the highest number of PRS resource sets, and the at least one PFL including the highest number of PRS resource sets has priority over the at least one PFL on the same BWP of the serving cell.

12. The method of claim 9, wherein the plurality of PFLs includes at least one SL PFL and at least one Uu PFL.

13. The method of claim 12, further comprising:
selecting the at least one SL PFL for the PFL if a number of sidelink devices associated with the least one SL PFL is greater than a device threshold or one or more sidelink devices associated with the least one SL PFL include a position confidence above a confidence threshold; and
selecting the at least one Uu PFL for the PFL if the number of sidelink devices associated with the at least one SL PFL is less than or equal to the device threshold or the one or more sidelink devices associated with the at least one SL PFL include the position confidence less than or equal to the confidence threshold.

14. A computer-readable medium storing computer executable code that, when executed by a processor of a user equipment (UE), causes the processor to perform a method according to any of claims 9 to 13.
